(19) Europäisches Patentamt
European Patent Office
Office européen des brevets

(11) Veröffentlichungsnummer: **0 479 725 B1**

(12) **EUROPÄISCHE PATENTSCHRIFT**

(45) Veröffentlichungstag der Patentschrift: **26.04.95**

(51) Int. Cl.$^6$: **C08F 279/02**, C08F 285/00, C08C 19/22, C08F 279/04, C08F 279/06

(21) Anmeldenummer: **91810752.5**

(22) Anmeldetag: **25.09.91**

(54) **Stabilisierte Styrolcopolymere enthaltend Elastomerteilchen.**

(30) Priorität: **04.10.90 CH 3200/90**

(43) Veröffentlichungstag der Anmeldung:
**08.04.92 Patentblatt 92/15**

(45) Bekanntmachung des Hinweises auf die Patenterteilung:
**26.04.95 Patentblatt 95/17**

(84) Benannte Vertragsstaaten:
**BE DE FR GB IT NL**

(56) Entgegenhaltungen:
**EP-A- 0 180 992**
**EP-A- 0 285 293**
**EP-A- 0 337 431**

(73) Patentinhaber: **CIBA-GEIGY AG**
**Klybeckstrasse 141**
**CH-4002 Basel (CH)**

(72) Erfinder: **Gilg, Bernard, Dr.**
**R. de la Petite Camargue 20**
**F-68300 St. Louis-La-Chaussée (FR)**
Erfinder: **Rytz, Gerhard, Dr.**
**Am Bach 2**
**CH-3150 Schwarzenburg (CH)**
Erfinder: **Stauffer, Werner**
**Av. Jean-Marie Musy 6**
**CH-1700 Fribourg (CH)**
Erfinder: **Clauss, Margot, Dr.**
**rue de Mulhouse 36**
**F-68400 Riedisheim (FR)**

EP 0 479 725 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft gegen Lichtschädigung stabilisierte Copolymere von Styrol oder α-Methylstyrol und mindestens einem Comonomer, die vernetzte Elastomerteilchen enthalten.

Styrolcopolymere, welche Elastomerteilchen enthalten, sind bekannt als thermoplastische Kunststoffe mit hoher Schlagzähigkeit. Vorzugsweise handelt es sich dabei um Pfropfcopolymere. Diese bestehen aus einer thermoplastischen Styrolcopolymer-Matrix, welche als disperse Phase vernetzte Elastomerteilchen enthält, wobei das auf die Elastomerteilchen aufgepfropfte Copolymere als Phasenvermittler wirkt. Hergestellt werden diese Styrolcopolymeren, indem man leicht vernetzte Elastomerteilchen einer Pfropfpolymerisation mit Styrol und einem oder mehreren Comonomeren unterwirft. Die leicht vernetzten Elastomerteilchen können durch Phaseninversion in Masse oder durch Emulsionspolymerisation hergestellt werden. Als Elastomer eignen sich z.B. Polybutadien, Butadien/Acrylnitril- oder Butadien/Styrol-Copolymere, Ethylen/Propylen/Dien-Terpolymere oder Acrylat-Elastomere, wie z.B. Polybutylacrylat und dessen Copolymere.

Pfropfcopolymere von Styrol/Acrylnitril auf Polybutadien bezeichnet man als ABS-Polymere, Pfropfcopolymere von Styrol/Methylmethacrylat auf Polybutadien als MBS-Polymere. Ausser diesen beiden wichtigsten Typen sind noch andere Styrolcopolymere mit Elastomerphasen bekannt geworden sowie deren Polymermischungen (Blends) mit Styrol-Copolymeren oder anderen Thermoplasten. Siehe dazu Encyclopedia Polymer Sci. Engng., J. Wiley 1985, Vol. 1, Seite 388-426; Ullmanns Encyclop. d. techn. Chemie, Verlag Chemie 1980, Band 19, Seite 277-295.

Kunststoffe vom ABS-Typ sind technische Thermoplaste, die in grossem Umfang z.B. bei der Herstellung von Haushalts-, Elektro- oder Sportgeräten sowie von Automobilteilen verwendet werden. Für eine Verwendung im Aussensektor müssen diese Polymeren gegen Licht und Sauerstoff stabilisiert werden. Es ist bekannt, dass Elastomer-Styrol-Pfropfcopolymere rasch altem und dadurch verspröden. Beispielsweise wurde beim Bestrahlen von ABS-Polymeren mit UV-Licht ein Verschwinden der Doppelbindungen in der Polybutadien-Phase gleichzeitig mit einer Versprödung des Polymeren festgestellt, was schliesslich zum Verlust der Schlagzähigkeit führt (G. Scott, M. Tahan, Eur. Polym. J. 13 (1977), 982).

Zur Stabilisierung setzt man diesen Polymeren Antioxidantien und Lichtschutzmittel zu. Als Lichtschutzmittel werden heute vor allem sterisch gehinderte Amine verwendet, insbesondere in Kombination mit UV-Absorbern. Solche Kombinationen werden z.B. in der DE-A-2 417 535 für alle Arten von Styrol-Copolymerisaten empfohlen. Hierbei handelt es sich um eine Stabilisierung durch Zusatz von Lichtschutzmitteln (physikalische Mischung).

In der EP-A-337 481 wurde vorgeschlagen, sterisch gehinderte Amine in die Elastomerphase chemisch einzubauen, was durch Pfropfcopolymerisation von ethylenisch ungesättigten sterisch gehinderten Aminen auf die Elastomerteilchen bewirkt werden kann. Als ungesättigte sterisch gehinderte Amine eignen sich vor allem ungesättigte Derivate des 2,2,6,6-Tetramethylpiperidins, wie z.B. das 4-Acryloyloxy-1,2,2,6,6-pentamethylpiperidin. Das Aufpfropfen geschieht vorzugsweise in wässriger Emulsion. Anschliessend wird ein Gemisch von Styrol oder α-Methylstyrol und mindestens einem Comonomer auf die modifizierten Elastomerteilchen aufgepfropft.

Dadurch wird erreicht, dass das Lichtschutzmittel an die Elastomerphase des Copolymeren dauerhaft gebunden wird. Dies ist deshalb wichtig, weil die Elastomerphase empfindlich gegen photooxidativen Abbau ist.

In der EP-A-337 431 ist auch beschrieben, dass den so stabilisierten Copolymeren noch andere, bekannte Stabilisatoren zugesetzt werden können, z.B. Antioxidantien, UV-Absorber, Metalldesaktivatoren oder Phosphite. Der physikalische Zusatz eines weiteren sterisch gehinderten Amins ist dort nicht erwähnt, da nicht zu erwarten war, dass ein zweites sterisch gehindertes Amin einen zusätzlichen Effekt bringt.

Ueberraschend wurde jedoch gefunden, dass sich die an sich gute Stabilisierung durch chemischen Einbau eines sterisch gehinderten Amins in die Elastomerphase noch erheblich steigern lässt, wenn man dem fertigen Copolymeren ein zweites sterisch gehindertes Amin zugibt, welches nicht ungesättigt ist und daher nicht chemisch eingebaut wird.

Gegenstand der Erfindung ist daher ein gegen Lichtschädigung stabilisiertes Copolymer aus Styrol oder α-Methylstyrol und mindestens einem Comonomer, wobei das Copolymer vernetzte Elastomerteilchen enthält, welche durch Copolymerisation mit einem ungesättigten Derivat eines sterisch gehinderten Amins modifiziert sind, dadurch gekennzeichnet, dass das Copolymer ausserdem ein nicht-ungesättigtes sterisch gehindertes Amin enthält.

Bei diesen Copolymeren handelt es sich vorzugsweise um Pfropfcopolymere von Styrol und mindestens einem Comonomer auf dem modifizierten Elastomer.

Das Comonomer kann eine beliebige polymerisierbare ungesättigte Verbindung sein, beispielsweise ein Acrylsäure-, Methacrylsäure- oder Maleinsäurederivat oder ein Styrolderivat. Bevorzugt ist das Comonomere Acrylnitril oder Methylmethacrylat. Es können auch zwei Comonomere verwendet werden, z.B. Gemische von Acrylnitril und Methylmethacrylat oder Gemische von Acrylnitril oder Methylmethacrylat mit kleinen Mengen an Vinylacetat, Butylacrylat oder Maleinsäureestern.

Bevorzugt handelt es sich bei den Copolymeren um solche aus Styrol und Acrylnitril oder Styrol und Methylmethacrylat.

Das Elastomer kann ein beliebiges für Pfropfcopolymerisationen geeignetes Elastomer sein. Beispiele hierfür sind Polybutadien, Butadien-Acrylnitril-Copolymere, Butadien-Styrol-Copolymere, Ethylen-Propylen-Dien-Terpolymere oder Polybutylacrylat und dessen Copolymere. Bevorzugt ist das Elastomer Polybutadien. Die Herstellung dieser Elastomerteilchen geschieht nach bekannten Verfahren, wie durch Massepolymerisation oder Suspensionspolymerisation, insbesondere aber durch Emulsionspolymerisation. Die Elastomerteilchen sind schwach vernetzt und haben im allgemeinen einen durchschnittlichen Durchmesser von 0,1 bis 50 µm, vorzugsweise 0,5 bis 20 µm.

Die Modifikation des Elastomeren mit dem sterisch gehinderten Amin erfolgt durch Copolymerisation. Die Copolymerisation kann bei der Herstellung des Elastomeren geschehen oder als Pfropfcopolymerisation auf das vernetzte Elastomer. Die Pfropfung mit dem sterisch gehinderten Amin kann gleichzeitig mit der Pfropfung mit dem Styrol/Comonomer-Gemisch erfolgen. Vorzugsweise verfährt man in zwei Schritten, indem man zuerst das ungesättigte Derivat des sterisch gehinderten Amins aufpfropft und anschliessend das Styrol/Comonomer-Gemisch. Die Pfropfpolymerisation erfolgt vorzugsweise in Emulsion.

Als ungesättigtes Derivat eines sterisch gehinderten Amins wird vorzugsweise ein copolymerisierbares ungesättigtes Derivat des 2,2,6,6-Tetramethylpiperidins verwendet. Hierbei kann sich die ungesättigte Gruppe in einem Substituenten in 4-Stellung oder/und 1-Stellung des Piperidinringes befinden. Beispiele für ungesättigte Gruppen sind vor allem Acryloyl- und Methacryloylgruppen, ferner Maleinsäuregruppen, Vinylether- und Allylethergruppen, Allylaminogruppen oder Crotonylgruppen.

Bevorzugt verwendet man zur Copolymerisation mit dem Elastomer eine Verbindung der Formel I,

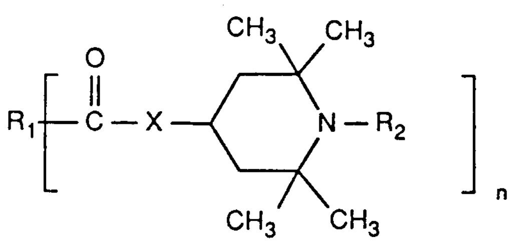

I

worin n 1 oder 2 ist und X -O- oder $-N(R_3)-$ bedeutet,

$R_1$ bei n = 1 $C_1$-$C_{18}$-Alkyl, $C_2$-$C_{20}$-Alkenyl, $C_5$-$C_8$-Cycloalkyl, $C_7$-$C_9$-Phenylalkyl, Phenyl, durch Halogen, $C_1$-$C_4$-Alkyl oder $C_1$-$C_4$-Alkoxy substituiertes Phenyl oder eine Gruppe $R_4OOC$-CH = CH- bedeutet, und bei n = 2 $C_2$-$C_{10}$-Alkylen, Vinylen, $C_6$-$C_{12}$-Arylen oder Cyclohexylen bedeutet,

$R_2$ Wasserstoff, $O^{\cdot}$, $C_1$-$C_{12}$-Alkyl, $C_3$-$C_5$-Alkenyl, $C_7$-$C_9$-Phenylalkyl, $C_1$-$C_{18}$-Alkoxy, $C_5$-$C_8$-Cycloalkoxy, $C_7$-$C_9$-Phenylalkoxy, $C_2$-$C_{10}$-Alkanoyl, $C_3$-$C_6$-Alkenoyl oder eine Gruppe der Formel Ia

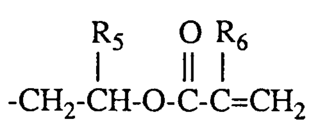

Ia

bedeutet,

$R_3$ Wasserstoff, $C_1$-$C_{12}$-Alkyl oder $C_5$-$C_8$-Cycloalkyl bedeutet.

$R_4$ Wasserstoff oder $C_1$-$C_{12}$-Alkyl bedeutet,

$R_5$ Wasserstoff, $CH_3$ oder CN bedeutet und

$R_6$ Wasserstoff, $C_1$-$C_{12}$-Alkyl oder Phenyl bedeutet,

wobei mindestens einer der Substituenten $R_1$ und $R_2$ eine ethylenische Doppelbindung enthält.

Bevorzugt verwendet man auch die Verbindungen der Formel II,

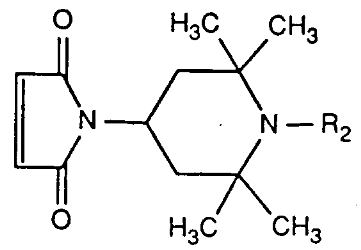

II

worin $R_2$ Wasserstoff, $C_1$-$C_{12}$-Alkyl, $C_3$-$C_5$-Alkenyl, $C_7$-$C_9$-Phenylalkyl, $C_1$-$C_{18}$-Alkoxy, $C_5$-$C_8$-Cycloalkoxy, $C_7$-$C_9$-Phenylalkoxy oder $C_2$-$C_{10}$-Alkanoyl bedeutet.

Unter den Verbindungen der Formel I sind bevorzugt

a) diejenigen, worin n 1 ist, X -O- ist, $R_1$ $C_2$-$C_5$-Alkenyl ist und $R_2$ Wasserstoff, $C_1$-$C_4$-Alkyl, Allyl, Benzyl oder Acetyl bedeutet,

b) diejenigen, worin n 1 oder 2 ist, X -O- ist, $R_1$ bei n = 1 $C_1$-$C_{18}$-Alkyl, Cyclohexyl oder Phenyl und bei n = 2 $C_2$-$C_8$-Alkylen bedeutet und $R_2$ $C_3$-$C_6$-Alkenoyl bedeutet,

c) diejenigen, worin n 1 ist, X -O- ist, $R_1$ $C_2$-$C_5$-Alkenyl ist und $R_2$ eine Gruppe der Formel Ia ist, worin $R_5$ und $R_6$ Wasserstoff oder $CH_3$ bedeuten.

In diesen Formeln können $R_1$, $R_2$, $R_3$, $R_4$ und $R_6$ als Alkyl unverzweigt oder verzweigt sein. Beispiele hierfür sind Methyl, Ethyl, n-Propyl, iso-Propyl, n-Butyl, sec.Butyl, tert.Butyl, iso-Pentyl, n-Hexyl, n-Octyl, 2-Ethylhexyl, n-Decyl, iso-Undecyl oder n-Dodecyl. $R_1$ als Alkyl kann beispielsweise auch Tetradecyl, Hexadecyl oder Octadecyl sein.

$R_1$ als $C_2$-$C_{20}$-Alkenyl kann z.B. Vinyl, Propenyl, iso-Propenyl, Butenyl, Pentenyl, Undecenyl oder Oleyl sein, insbesondere Vinyl und 2-Propenyl (iso-Propenyl). $R_2$ als $C_3$-$C_5$-Alkenyl ist vorzugsweise Allyl.

$R_1$ und $R_3$ als $C_5$-$C_8$-Cycloalkyl können z.B. Cyclopentyl, Cyclohexyl oder Cyclooctyl sein, insbesondere aber Cyclohexyl.

$R_1$ und $R_2$ als $C_7$-$C_9$-Phenylalkyl können z.B. Benzyl, Phenylethyl oder Phenylpropyl sein, insbesondere aber Benzyl.

$R_2$ als $C_1$-$C_{18}$-Alkoxy kann insbesondere $C_6$-$C_{10}$-Alkoxy sein. $R_2$ als $C_5$-$C_8$-Cycloalkoxy kann insbesondere Cyclohexyloxy sein. $R_2$ als $C_7$-$C_9$-Phenylalkoxy kann insbesondere Benzyloxy oder Phenylethoxy sein.

$R_2$ als $C_2$-$C_{10}$-Alkanoyl kann z.B. Acetyl, Propionyl, Butyroyl, iso-Butyroyl, n-Pentanoyl, tert.Pentanoyl, Hexanoyl, Octanoyl oder iso-Decanoyl sein, insbesondere aber Acetyl. $R_2$ als $C_3$-$C_6$-Alkenoyl ist insbesondere Acryloyl oder Methacryloyl.

$R_1$ als $C_2$-$C_{10}$-Alkylen kann z.B. Di-, Tri-, Tetra-, Hexa-, Octa-, Decamethylen, 2,2-Dimethyltrimethylen oder 1,3,3-Trimethyltetramethylen sein.

$R_1$ als $C_6$-$C_{12}$-Arylen kann z.B. Phenylen, Naphthylen oder Diphenylen sein, insbesondere Phenylen.

Alle Verbindungen der Formeln I und II enthalten mindestens eine ethylenische Doppelbindung, auf Grund derer die Verbindung zur Copolymerisation befähigt ist. Die Verbindungen können aber auch zwei Doppelbindungen enthalten. Solche Verbindungen werden bevorzugt während der Herstellung des Elastomeren copolymerisiert.

Beispiele für Verbindungen der Formel I sind:

1,2,2,6,6-Pentamethyl-4-piperidinyl-acrylat, -methacrylat oder -crotonat,
2,2,6,6-Tetramethyl-4-piperidinyl-acrylat, -methacrylat oder -crotonat,
1-Allyl-2,2,6,6-tetramethyl-4-piperidinyl-acrylat, -methacrylat oder -crotonat,
1-Benzyl-2,2,6,6-tetramethyl-4-piperidinyl-acrylat, -methacrylat oder -crotonat,
1-Octyloxy-2,2,6,6-tetramethyl-4-piperidinyl-acrylat, -methacrylat oder -crotonat,
N-(2,2,6,6-Tetramethyl-4-piperidinyl)-acrylamid,
N-Methyl-N-(1,2,2,6,6-pentamethyl-4-piperidinyl)-methacrylamid,
N-Butyl-N-(1,2,2,6,6-pentamethyl-4-piperidinyl)-acrylamid,
Monoethyl-mono(1,2,2,6,6-pentamethyl-4-piperidinyl)-maleinat,
Di(2,2,6,6-tetramethyl-4-piperidinyl)-fumarat,
Monohexylmaleinat-N-(2,2,6,6-tetramethyl-4-piperidinyl)-N-butylamid,
N,N'-Di(1,2,2,6,6-pentamethyl-4-piperidinyl)-N,N'-dibutyl-maleindiamid,
1-Acryloyl-2,2,6,6-tetramethyl-4-acetoxypiperidin,
1-Methacryloyl-2,2,6,6-tetramethyl-4-butyroyloxypiperidin,

1-Crotonyl-2,2,6,6-tetramethyl-4-benzoyloxypiperidin,
1-Acryloyl-2,2,6,6-tetramethyl-4-acryloyloxypiperidin,
1-Methacryloyl-2,2,6,6-tetramethyl-4-methacryloyloxypiperidin,
1-Acryloyl-2,2,6,6-tetramethyl-4-(4-chlorbenzoyloxy)-piperidin,
Di(1-acryloyl-2,2,6,6-tetramethyl-4-piperidinyl)-sebacat,
Di(1-methacryloyl-2,2,6,6-tetramethyl-4-piperidinyl)-adipat,
Di(1-acryloyl-2,2,6,6-tetramethyl-4-piperidinyl)-succinat,
Di(1-crotonoyl-2,2,6,6-tetramethyl-4-piperidinyl)-phthalat,
N-(1-Acryloyl-2,2,6,6-tetramethyl-4-piperidinyl)-acetamid,
N-(1-Acryloyl-2,2,6,6-tetramethyl-4-piperidinyl)-N-butyl-benzamid,
N,N'-Di(1-methacryloyl-2,2,6,6-tetramethyl-4-piperidinyl)-N,N'-dicyclohexylisophthalamid,
1-(2-Acryloyloxyethyl)-4-acryloyloxy-2,2,6,6-tetramethylpiperidin,
1-(2-Methacryloyloxyethyl)-4-methacryloyloxy-2,2,6,6-tetramethylpiperidin,
1-(2-Acryloyloxypropyl)-4-acryloyloxy-2,2,6,6-tetramethylpiperidin
4-Acryloyloxy-1,2,2,6,6-pentamethylpiperidin.

Beispiele für Verbindungen der Formel II sind:
N-(2,2,6,6-Tetramethyl-4-piperidinyl)-maleinimid,
N-(1,2,2,6,6-Pentamethyl-4-piperidinyl)-maleinimid,
N-(1-Benzyl-2,2,6,6-tetramethyl-4-piperidinyl)-maleinimid,
N-(1-Acetyl-2,2,6,6-tetramethyl-4-piperidinyl)-maleinimid.

Die erfindungsgemäss verwendbaren ungesättigten Derivate von sterisch gehinderten Aminen sind jedoch keineswegs auf Verbindungen der Formel I und II beschränkt. Im Prinzip lässt sich jedes ungesättigte Derivat eines sterisch gehinderten Amins verwenden, soweit es zur Copolymerisation mit der Elastomer-Komponente befähigt ist.

Das ungesättigte sterisch gehinderte Amin kann allein oder zusammen mit anderen ungesättigten Verbindungen copolymerisiert werden. Beispiele für solche Comonomere sind Alkylacrylate, Alkylmethacrylate, Acryl- und Methacrylamide, Acrylnitril oder Methacrylnitril, insbesondere Alkyl(meth)acrylate.

Das Gemisch von Styrol oder $\alpha$-Methylstyrol und dem Comonomer kann gemeinsam mit dem ungesättigten Derivat eines sterisch gehinderten Amins auf die Elastomerteilchen aufgepfropft werden. Vorzugsweise führt man die Pfropfcopolymerisation in zwei Schritten durch. Im ersten Schritt pfropft man das ungesättigte sterisch gehinderte Amin allein oder zusammen mit anderen ungesättigten Verbindungen auf das Elastomere auf. In einem zweiten Schritt wird darauf das Gemisch von Styrol oder $\alpha$-Methylstyrol und dem Comonomer aufgepfropft.

Alternativ können die mit dem ungesättigten sterisch gehinderten Amin gepfropften Elastomerteilchen in einem zweiten Schritt mit einem separat hergestellten Styrol- bzw. $\alpha$-Methylstyrol-Copolymer vermischt werden. Bevorzugt wird jedoch die Styrolphase auf das modifizierte Elastomer aufgepfropft.

Die Copolymerisation bzw. Pfropfcopolymerisation geschieht nach den hierfür üblichen Verfahren. Vorzugsweise führt man sie in Emulsion durch. Als Emulgator verwendet man vorzugsweise anionische Tenside, beispielsweise Alkalisulfonate oder Alkaliresinate. Die Teilchengrösse des Polymerisats kann durch die Menge und die Dosierung des Tensids kontrolliert werden. Als Polymerisationsinitiatoren für die Herstellung der Elastomerphase verwendet man vorzugsweise wasserlösliche Radikalinitiatoren, wie z.B. Kaliumpersulfat. Zur Polymerisation der Styrolphase verwendet man vorzugsweise Redox-Initiatoren, wie z.B. das System Eisen(II)salz / organisches Peroxid. Beide Stufen der Polymerisation werden vorzugsweise unterhalb 100 °C durchgeführt, insbesondere bei 40-70 °C. Die Isolierung des Copolymerisates kann z.B. durch Koagulation oder durch Sprühtrocknung geschehen. Eine Koagulation der Emulsion kann erreicht werden durch Zusatz von wasserlöslichen Salzen, durch Erhöhung der Temperatur, durch Erniedrigung des pH-Wertes oder durch Ausfrieren.

Der Zusatz des nicht-ungesättigten sterisch gehinderten Amins kann vor oder nach der Koagulation erfolgen. Bevorzugt geschieht der Zusatz zum isolierten und getrockneten Copolymer. Dazu sind alle für Kunststoff-Additive gebräuchlichen Methoden geeignet, beispielsweise das Vermischen in Pulverform, der Zusatz auf einer Mischwalze oder in einem Extruder.

Bevorzugt beträgt die Menge des durch Copolymerisation eingebauten sterisch gehinderten Amins 0,1 bis 10 Gew.-% des Copolymeren und die Menge des zugesetzten nicht-ungesättigten sterisch gehinderten Amins 0,05 bis 5 Gew.-% des Copolymeren.

Das zugesetzte nicht-ungesättigte sterisch gehinderte Amin ist bevorzugt ein Polyalkylpiperidin, das mindestens eine Gruppe der Formel III enthält,

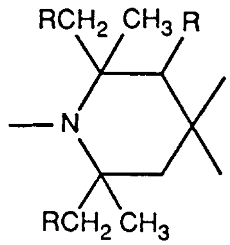

III

worin R Wasserstoff oder Methyl bedeutet. Bevorzugt ist R Wasserstoff. Es handelt sich dabei um Derivate des 2,2,6,6-Tetramethylpiperidins. Diese Verbindungen können niedermolekular (MG<700) oder höhermolekular (oligomer, polymer) sein. Bevorzugt tragen sie in 4-Stellung einen oder zwei polare Substituenten oder ein polares Spiro-Ringsystem.

Von Bedeutung als Lichtschutzmittel sind insbesondere folgende Klassen von Polyalkylpiperidinen.

a) Verbindungen der Formel IV

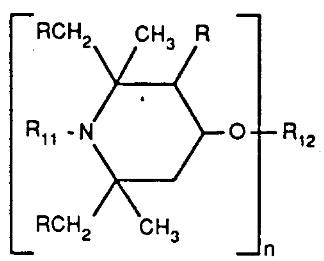

IV,

worin n eine Zahl von 1 bis 4, vorzugsweise 1 oder 2 bedeutet, R Wasserstoff oder Methyl bedeutet, $R_{11}$ Wasserstoff, Oxyl, Hydroxyl, $C_1$-$C_{12}$-Alkyl, $C_7$-$C_{12}$-Aralkyl, $C_1$-$C_{18}$-Alkoxy, $C_5$-$C_8$-Cycloalkoxy, $C_7$-$C_9$-Phenylalkoxy, $C_1$-$C_8$-Alkanoyl, $C_1$-$C_{18}$-Alkanoyloxy, Benzoyloxy, Glycidyl oder eine Gruppe $-CH_2CH(OH)-Z$, worin Z Wasserstoff, Methyl oder Phenyl ist, bedeutet, wobei $R_{11}$ vorzugsweise H, $C_1$-$C_4$-Alkyl, Benzyl, Acetyl, $C_1$-$C_{12}$-Alkoxy, $C_7$-$C_9$-Phenylalkoxy oder Cyclohexyloxy ist und $R_{12}$, wenn n 1 ist, Wasserstoff, gegebenenfalls durch ein oder mehrere Sauerstoffatome unterbrochenes $C_1$-$C_{18}$-Alkyl, Cyanethyl, Benzyl, Glycidyl, einen einwertigen Rest einer gesättigten aliphatischen, cycloaliphatischen, araliphatischen, oder aromatischen Carbonsäure, Carbaminsäure oder Phosphor enthaltenden Säure oder einen einwertigen Silylrest, vorzugsweise einen Rest einer gesättigten aliphatischen Carbonsäure mit 2 bis 18 C-Atomen, einer gesättigten cycloaliphatischen Carbonsäure mit 7 bis 15 C-Atomen oder einer aromatischen Carbonsäure mit 7 bis 15 C-Atomen bedeutet, wenn n 2 ist, $C_1$-$C_{12}$-Alkylen, Xylylen, einen zweiwertigen Rest einer gesättigten aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise den zweiwertigen Rest einer gesättigten aliphatischen Dicarbonsäure mit 2 bis 12 C-Atomen, einer gesättigten cycloaliphatischen oder aromatischen Dicarbonsäure mit 8 - 14 C-Atomen oder einer gesättigten aliphatischen, cycloaliphatischen oder aromatischen Dicarbaminsäure mit 8 - 14 C-Atomen bedeutet, wenn n 3 ist, einen dreiwertigen Rest einer gesättigten aliphatischen Tricarbonsäure mit 6 - 12 C-Atomen oder einer aromatischen Tricarbonsäure mit 9 - 15 C-Atomen bedeutet, und wenn n 4 ist, den vierwertigen Rest einer gesättigten aliphatischen Tetracarbonsäure mit 8 - 12 C-Atomen oder einer aromatischen Tetracarbonsäure mit 10 - 16 C-Atomen bedeutet.

Bedeuten etwaige Substituenten $C_1$-$C_{12}$-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

In der Bedeutung von $C_1$-$C_{18}$-Alkyl kann $R_{11}$ oder $R_{12}$ z.B. die oben angeführten Gruppen und dazu noch beispielsweise n-Tridecyl, n-Tetradecyl, n-Hexadecyl oder n-Octadecyl darstellen.

Als $C_7$-$C_{12}$-Aralkyl ist $R_{11}$ insbesondere Phenethyl und vor allem Benzyl.

$R_{11}$ ist als $C_1$-$C_8$-Alkanoyl beispielsweise Formyl, Propionyl, Butyryl, Octanoyl, aber bevorzugt Acetyl.

Bedeutet $R_{12}$ einen einwertigen Rest einer Carbonsäure, so stellt es beispielsweise einen Essigsäure-, Capronsäure-, Stearinsäure-, Acrylsäure-, Methacrylsäure-, Benzoe- oder $\beta$-(3,5-Di-tert.-butyl-4-hydroxyphenyl)-propionsäurerest dar.

Bedeutet $R_{12}$ einen zweiwertigen Rest einer Dicarbonsäure, so stellt es beispielsweise einen Malonsäure-, Bernsteinsäure-, Glutarsäure-, Adipinsäure, Korksäure-, Sebacinsäure-, Phthalsäure-, Dibutylmalonsäure-, Dibenzylmalonsäure- oder Butyl-(3,5-di-tert.butyl-4-hydroxybenzyl)-malonsäure. dar.

Stellt $R_{12}$ einen dreiwertigen Rest einer Tricarbonsäure dar, so bedeutet es z.B. einen Trimellitsäure-, Citronensäure- oder Nitrilotriessigsäurerest.

Stellt $R_{12}$ einen vierwertigen Rest einer Tetracarbonsäure dar, so bedeutet es z.B. den vierwertigen Rest von Butan-1,2,3,4-tetracarbonsäure oder von Pyromellitsäure.

Bedeutet $R_{12}$ einen zweiwertigen Rest einer Dicarbaminsäure, so stellt es beispielsweise einen Hexamethylendicarbaminsäure- oder einen 2,4-Toluylen-dicarbaminsäurerest dar.

Bevorzugt sind Verbindungen der Formel IV, worin R Wasserstoff ist, $R_{11}$ Wasserstoff oder Methyl ist, n 2 ist und $R_{12}$ der Diacylrest einer aliphatischen Dicarbonsäure mit 4-12 C-Atomen ist.

Beispiele für Polyalkylpiperidin-Verbindungen dieser Klasse sind folgende Verbindungen:

1) 4-Hydroxy-2,2,6,6-tetramethylpiperidin
2) 1-Benzyl-4-hydroxy-2,2,6,6-tetramethylpiperidin
3) 1-(4-tert.-Butyl-2-butenyl)-4-hydroxy-2,2,6,6-tetramethylpiperidin
4) 4-Stearoyloxy-2,2,6,6-tetramethylpiperidin
5) 1-Ethyl-4-salicyloyloxy-2,2,6,6-tetramethylpiperidin
6) 1,2,2,6,6-Pentamethylpiperidin-4-yl-$\beta$-(3,5-di-tert.-butyl-4-hydroxyphenyl)-propionat
7) Di-(1-benzyl-2,2,6,6-tetramethylpiperidin-4-yl)-maleinat
8) Di-(2,2,6,6-tetramethylpiperidin-4-yl)-succinat
9) Di-(2,2,6,6-tetramethylpiperidin-4-yl)-glutarat
10) Di-(2,2,6,6-tetramethylpiperidin-4-yl)-adipat
11) Di-(2,2,6,6-tetramethylpiperidin-4-yl)-sebacat
12) Di-(1,2,2,6,6-pentamethylpiperidin-4-yl)-sebacat
13) Di-(1,2,3,6-tetramethyl-2,6-diethyl-piperidin-4-yl)-sebacat
14) Tetra(2,2,6,6-tetramethylpiperidin-4-yl)-butane-1,2,3,4-tetracarboxylat
15) Tetra(1,2,2,6,6-pentamethylpiperidin-4-yl)-butane-1,2,3,4-tetracarboxylat
16) Trimellithsäure-tri-(2,2,6,6-tetramethylpiperidin-4-yl)-ester
17) Diethylmalonsäure-di(2,2,6,6-tetramethylpiperidin-4-yl)-ester
18) Dibutyl-malonsäure-di-(1,2,2,6,6-pentamethylpiperidin-4-yl)-ester
19) Butyl-(3,5-di-tert.-butyl-4-hydroxybenzyl)-malonsäure-di-(1,2,2,6,6-pentamethylpiperidin-4-yl)-ester
20) Di-(1-octyloxy-2,2,6,6-tetramethylpiperidin-4-yl)-sebacat
21) Di-(1-cyclohexyloxy-2,2,6,6-tetramethylpiperidin-4-yl)-sebacat
22) Hexan-1',6'-bis-(4-carbamoyloxy-1-n-butyl-2,2,6,6-tetramethylpiperidin)
23) Toluol-2',4'-bis-(4-carbamoyloxy-1-n-propyl-2,2,6,6-tetramethylpiperidin)
24) Dimethyl-bis-(2,2,6,6-tetramethylpiperidin-4-oxy)-silan
25) Phenyl-tris-(2,2,6,6-tetramethylpiperidin-4-oxy)-silan
26) Tris-(1-propyl-2,2,6,6-tetramethylpiperidin-4-yl)-phosphit
27) Tris-(1-propyl-2,2,6,6-tetramethylpiperidin-4-yl)phosphat
28) Phenyl-[bis-(1,2,2,6,6-pentamethylpiperidin-4-yl)]-phosphonat
29) 4-Hydroxy-1,2,2,6,6-pentamethylpiperidin
30) 4-Hydroxy-N-hydroxyethyl-2,2,6,6-tetramethylpiperidin
31) 4-Hydroxy-N-(2-hydroxypropyl)-2,2,6,6-tetramethylpiperidin
32) 1-Glycidyl-4-hydroxy-2,2,6,6-tetramethylpiperidin

b) Verbindungen der Formel V

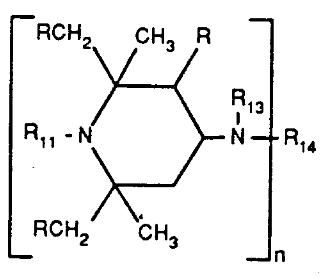

V

worin n die Zahl 1 oder 2 bedeutet, R und $R_{11}$ die unter a) angegebene Bedeutung haben, $R_{13}$ Wasserstoff, $C_1$-$C_{12}$-Alkyl, $C_2$-$C_5$-Hydroxyalkyl, $C_5$-$C_7$-Cycloalkyl, $C_7$-$C_8$-Aralky, $C_2$-$C_{18}$-Alkanoyl, Ben-

zoyl oder eine Gruppe der Formel

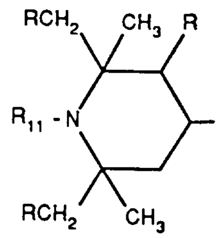

ist und $R_{14}$ wenn n 1 ist, Wasserstoff, $C_1$-$C_{18}$-Alkyl, $C_5$-$C_7$-Cycloalkyl, mit einer Hydroxy-, Cyano-, Alkoxycarbonyl- oder Carbamidgruppe substituiertes $C_1$-$C_4$-Alkyl, Glycidyl, eine Gruppe der Formel $-CH_2-CH(OH)-Z$ oder der Formel -CONH-Z ist, worin Z Wasserstoff, Methyl oder Phenyl bedeutet; wenn n 2 ist, $C_2$-$C_{12}$-Alkylen, $C_6$-$C_{12}$-Arylen, Xylylen, eine $-CH_2-CH(OH)-CH_2$-Gruppe oder eine Gruppe $-CH_2-CH(OH)-CH_2-O-D-O-$ bedeutet, worin D $C_2$-$C_{10}$-Alkylen, $C_6$-$C_{15}$-Arylen, $C_6$-$C_{12}$-Cycloalkylen ist, oder vorausgesetzt, dass $R_{13}$ nicht Alkanoyl oder Benzoyl bedeutet, $R_{14}$ auch einen zweiwertigen Rest einer gesättigten aliphatischen, cycloaliphatischen oder aromatischen Dicarbonsäure oder Dicarbaminsäure oder auch die Gruppe -CO- bedeuten kann, oder $R_{13}$ und $R_{14}$ zusammen, wenn n 1 ist, den zweiwertigen Rest einer gesättigten aliphatischen, cycloaliphatischen oder aromatischen 1,2- oder 1,3-Dicarbonsäure bedeuten können.

Stellen etwaige Substituenten $C_1$-$C_{12}$- oder $C_1$-$C_{18}$-Alkyl dar, so haben sie die bereits unter a) angegebene Bedeutung.

Bedeuten etwaige Substituenten $C_5$-$C_7$-Cycloalkyl, so stellen sie insbesondere Cyclohexyl dar.

Als $C_7$-$C_8$-Aralkyl ist $R_{13}$ insbesondere Phenylethyl oder vor allem Benzyl. Als $C_2$-$C_5$-Hydroxyalkyl ist $R_{13}$ insbesondere 2-Hydroxyethyl oder 2-Hydroxypropyl.

$R_{13}$ ist als $C_2$-$C_{18}$-Alkanoyl beispielsweise Propionyl, Butyryl, Octanoyl, Dodecanoyl, Hexadecanoyl, Octadecanoyl, aber bevorzugt Acetyl.

$R_{14}$ als mit einer Hydroxy-, Cyano-, Alkoxycarbonyl- oder Carbamidgruppe substituiertes $C_1$-$C_4$-Alkyl kann z.B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.

Stellen etwaige Substituenten $C_2$-$C_{12}$-Alkylen dar, so handelt es sich z.B. um Ethylen, Propylen, 2,2-Dimethylpropylen, Tetramethylen, Hexamethylen, Octamethylen, Decamethylen oder Dodecamethylen.

Bedeuten etwaige Substituenten $C_6$-$C_{15}$-Arylen, so stellen sie z.B. o-, m- oder p-Phenylen, 1,4-Naphthylen oder 4,4'-Diphenylen dar.

Als $C_6$-$C_{12}$-Cycloalkylen ist D insbesondere Cyclohexylen.

Bevorzugt sind Verbindungen der Formel V, worin n 1 oder 2 ist, R Wasserstoff ist, $R_{11}$ Wasserstoff oder Methyl ist, $R_{13}$ Wasserstoff, $C_1$-$C_{12}$-Alkyl oder eine Gruppe der Formel

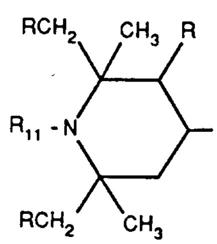

ist und $R_{14}$ im Fall von n = 1 Wasserstoff oder $C_1$-$C_{12}$-Alkyl ist, und im Fall von n = 2 $C_2$-$C_8$-Alkylen ist.

Beispiele für Polyalkylpiperidin-Verbindungen dieser Klasse sind folgende Verbindungen:

33) N,N'-Bis-(2,2,6,6-tetramethylpiperidin-4-yl)-hexamethylen-1,6-diamin
34) N,N'-Bis-(2,2,6,6-tetramethylpiperidin-4-yl)-hexamethylen-1,6-diacetamid
35) Bis-(2,2,6,6-tetramethylpiperidin-4-yl)-amin
36) 4-Benzoylamino-2,2,6,6-tetramethylpiperidin
37) N,N'-Bis-(2,2,6,6-tetramethylpiperidin-4-yl)-N,N'-dibutyl-adipamid
38) N,N'-Bis-(2,2,6,6-tetramethylpiperidin-4-yl)-N,N'-dicyclohexyl-2-hydroxypropylen-1,3-diamin
39) N,N'-Bis-(2,2,6,6-tetramethylpiperidin-4-yl)-p-xylylen-diamin

40) N,N'-Bis-(2,2,6,6-tetramethylpiperidin-4-yl)-succindiamid

41) N-(2,2,6,6-Tetramethylpiperidin-4-yl)-$\beta$-aminopropionsäure-dodecylester

42) Die Verbindung der Formel

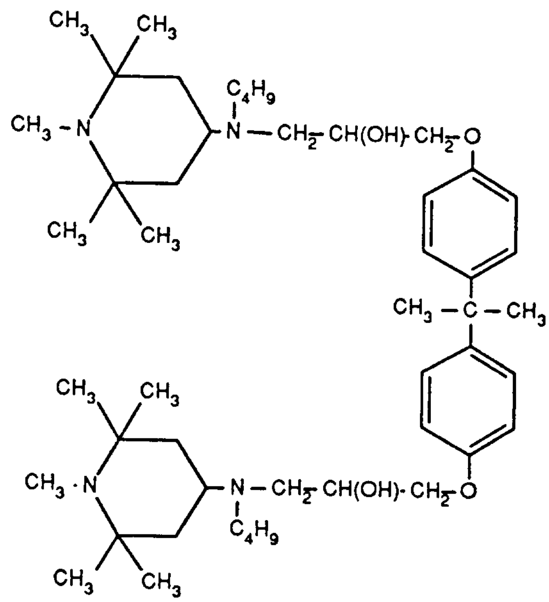

43) 4-(Bis-2-hydroxyethyl-amino)-1,2,2,6,6-pentamethylpiperidin

44) N-(2,2,6,6-Tetramethylpiperidin-4-yl)-$\alpha$-dodecylsuccinimid

c) Verbindungen der Formel VI

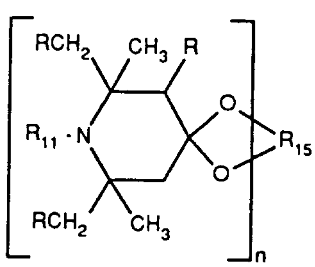

VI

worin n die Zahl 1 oder 2 bedeutet, R und $R_{11}$ die unter a) angegebene Bedeutung haben und $R_{15}$, wenn n 1 ist, $C_2$-$C_8$-Alkylen oder -Hydroxyalkylen oder $C_4$-$C_{22}$-Acyloxyalkylen, wenn n 2 ist, die Gruppe $(-CH_2)_2C(CH_2-)_2$ bedeutet.

Bedeutet $R_{15}$ $C_2$-$C_8$-Alkylen oder -Hydroxyalkylen, so stellt es beispielsweise Ethylen, 1-Methylethylen, Propylen, 2-Ethyl-propylen oder 2-Ethyl-2-hydroxymethylpropylen dar.

Als $C_4$-$C_{22}$-Acyloxyalkylen bedeutet $R_{15}$ z.B. 2-Ethyl-2-acetoxymethylpropylen.

Beispiele für Polyalkylpiperidin-Verbindungen dieser Klasse sind folgende Verbindungen:

45) 9-Aza-8,8,10,10-tetramethyl-1,5-dioxaspiro[5.5]undecan

46) 9-Aza-8,8,10,10-tetramethyl-3-ethyl-1,5-dioxaspiro[5.5]undecan

47) 8-Aza-2,7,7,8,9,9-hexamethyl-1,4-dioxaspiro[4.5]decan

48) 9-Aza-3-hydroxymethyl-3-ethyl-8,8,9,10,10-pentamethyl-1,5-dioxaspiro[5.5]undecan

49) 9-Aza-3-ethyl-3-acetoxymethyl-9-acetyl-8,8,10,10-tetramethyl-1,5-dioxaspiro[5.5]undecan

50) 2,2,6,6-Tetramethylpiperidin-4-spiro-2'-(1',3'-dioxan)-5'-spiro-5''-(1'',3''-dioxan)-2''-spiro-4'''-(2''',2''',6''',6'''-tetramethylpiperidin).

d) Verbindungen der Formeln VIIA, VIIB und VIIC

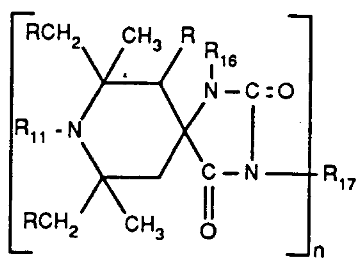

VIIA

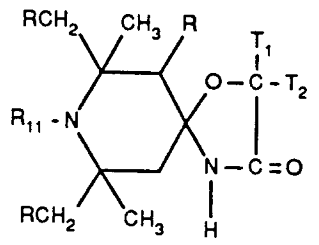

VIIB

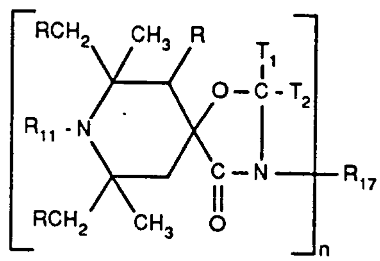

VIIC

worin n die Zahl 1 oder 2 bedeutet, R und $R_{11}$ die unter a) angegebene Bedeutung haben, $R_{16}$ Wasserstoff, $C_1$-$C_{12}$-Alkyl, Allyl, Benzyl, Glycidyl oder $C_2$-$C_6$-Alkoxyalkyl ist und $R_{17}$, wenn n 1 ist, Wasserstoff, $C_1$-$C_{12}$-Alkyl, $C_7$-$C_9$-Aralkyl, $C_5$-$C_7$-Cycloalkyl, $C_2$-$C_4$-Hydroxyalkyl, $C_2$-$C_6$-Alkoxyalkyl, $C_6$-$C_{10}$-Aryl, Glycidyl oder eine Gruppe der Formel $-(CH_2)_p$-COO-Q oder der Formel $-(CH_2)_p$-O-CO-Q ist, worin p 1 oder 2 und Q $C_1$-$C_4$-Alkyl oder Phenyl sind, wenn n 2 ist, $C_2$-$C_{12}$-Alkylen, $C_6$-$C_{12}$-Arylen, eine Gruppe $-CH_2-CH(OH)-CH_2-O-D-O-CH_2-CH(OH)-CH_2-$, worin D $C_2$-$C_{10}$-Alkylen, $C_6$-$C_{15}$-Arylen oder $C_6$-$C_{12}$-Cycloalkylen ist, oder eine Gruppe $-CH_2CH(OZ')CH_2-(OCH_2-CH(OZ')CH_2)_2-$ bedeutet, worin Z' Wasserstoff, $C_1$-$C_{18}$-Alkyl, Benzyl, $C_2$-$C_{12}$-Alkanoyl oder Benzoyl ist, $T_1$ und $T_2$ unabhängig voneinander Wasserstoff, $C_1$-$C_{18}$-Alkyl oder gegebenenfalls durch Halogen oder $C_1$-$C_4$-Alkyl substituiertes $C_6$-$C_{10}$-Aryl oder $C_7$-$C_9$-Aralkyl bedeuten oder $T_1$ und $T_2$ zusammen mit dem sie bindenden C-Atom einen $C_5$-$C_{12}$-Cycloalkanring bilden.

Bedeuten etwaige Substituenten $C_1$-$C_{12}$-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

Etwaige Substituenten in der Bedeutung von $C_1$-$C_{18}$-Alkyl können z.B. die oben angeführten Gruppen und dazu noch beispielsweise n-Tridecyl, n-Tetradecyl, n-Hexadecyl oder n-Octadecyl darstellen.

Bedeuten etwaige Substituenten $C_2$-$C_6$-Alkoxyalkyl, so stellen sie z.B. Methoxymethyl, Ethoxymethyl, Propoxymethyl, tert.-Butoxymethyl, Ethoxyethyl, Ethoxypropyl, n-Butoxyethyl, tert.-Butoxyethyl, Isopropoxyethyl oder Propoxypropyl dar.

Als $C_7$-$C_9$-Aralkyl sind $R_{17}$, $T_1$ und $T_2$ insbesondere Phenethyl oder vor allem Benzyl. Bilden $T_1$ und $T_2$ zusammen mit dem C-Atom einen Cycloalkanring, so kann dies z.B. ein Cyclopentan-, Cyclohexan-, Cyclooctan- oder Cyclododecanring sein.

Bedeutet $R_{17}$ $C_2$-$C_4$-Hydroxyalkyl, so stellt es z.B. 2-Hydroxyethyl, 2-Hydroxypropyl, 2-Hydroxybutyl oder 4-Hydroxybutyl dar.

Als $C_6$-$C_{10}$-Aryl bedeuten $R_{17}$, $T_1$ und $T_2$ insbesondere Phenyl, α- oder β-Naphthyl, die gegebenenfalls mit Halogen oder $C_1$-$C_4$-Alkyl substituiert sind.

Stellt $R_{17}$ $C_2$-$C_{12}$-Alkylen dar, so handelt es sich z.B. um Ethylen, Propylen, 2,2-Dimethylpropylen, Tetramethylen, Hexamethylen, Octamethylen, Decamethylen oder Dodecamethylen.

Bedeutet $R_{17}$ $C_6$-$C_{12}$-Arylen, so stellt es beispielsweise o-, m- oder p-Phenylen, 1,4-Naphthylen oder 4,4'-Diphenylen dar.

Bedeutet Z' $C_2$-$C_{12}$-Alkanoyl, so stellt es beispielsweise Propionyl, Butyryl, Octanoyl, Dodecanoyl, aber bevorzugt Acetyl dar.

D hat als $C_2$-$C_{10}$-Alkylen, $C_6$-$C_{15}$-Arylen oder $C_6$-$C_{12}$-Cycloalkylen die unter b) angegebene Bedeutung.

Beispiele für Polyalkylpiperidin-Verbindungen dieser Klasse sind folgende Verbindungen:

51) 3-Benzyl-1,3,8-triaza-7,7,9,9-tetramethylspiro[4.5]decan-2,4-dion

52) 3-n-Octyl-1,3,8-triaza-7,7,9,9-tetramethylspiro[4.5]decan-2,4-dion

53) 3-Glycidyl-1,3,8-triaza-7,7,8,9,9-pentamethylspiro[4.5]decan-2,4-dion

54) 1,3,7,7,8,9,9-Heptamethyl-1,3,8-triazaspiro[4.5]decan-2,4-dion

55) 2-Iso-propyl-7,7,9,9-tetramethyl-1-oxa-3,8-diaza-4-oxo-spiro[4.5]decan

56) 2,2-Dibutyl-7,7,9,9-tetramethyl-1-oxa-3,8-diaza-4-oxo-spiro-[4.5]decan

57) 2,2,4,4-Tetramethyl-7-oxa-3,20-diaza-21-oxo-dispiro[5.1.11.2]heneicosan

58) 2-Butyl-7,7,9,9-tetramethyl-1-oxa-4,8-diaza-3-oxo-spiro-[4,5]decan

59) 8-Acetyl-3-dodecyl-1,3,8-triaza-7,7,9,9-tetramethylspiro[4,5]-decan-2,4-dion oder die Verbindungen der folgenden Formeln:

60)

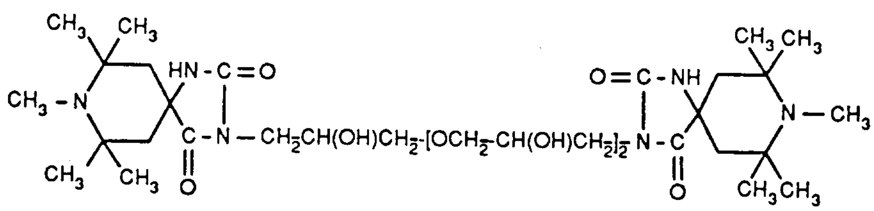

61)

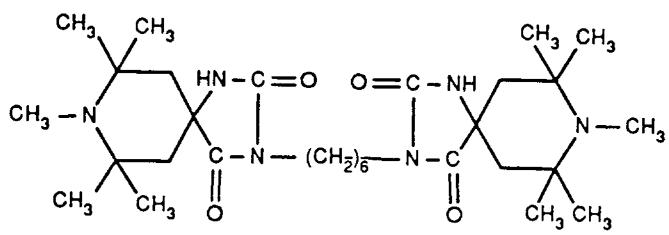

62)

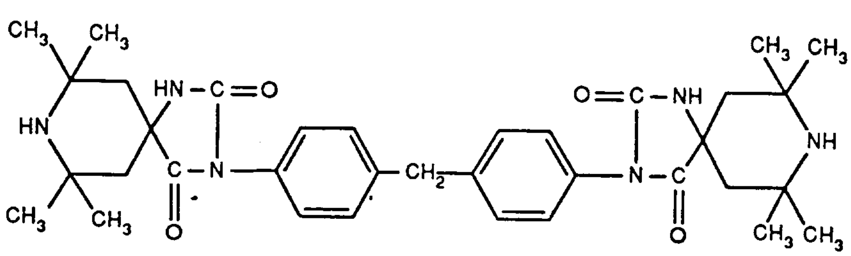

63)

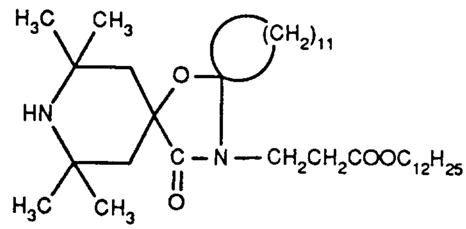

e) Verbindungen der Formel VIII

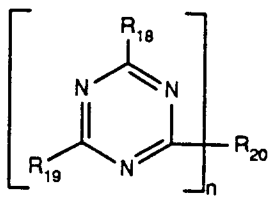

VIII,

worin n die Zahl 1 oder 2 ist und $R_{18}$ eine Gruppe der Formel

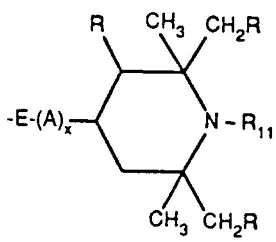

bedeutet, worin R und $R_{11}$ die unter a) angegebene Bedeutung haben, E -O- oder $-NR_{21}$-ist, A $C_2$-$C_6$-Alkylen oder $-(CH_2)_3$-O- und x die Zahlen O oder 1 bedeuten, $R_{19}$ gleich $R_{18}$ oder eine der Gruppen $-NR_{21}R_{22}$,$-OR_{23}$, $-NHCH_2OR_{23}$ oder $-N(CH_2OR_{23})_2$ ist, $R_{20}$, wenn n = 1 ist, gleich $R_{18}$ oder $R_{19}$, und wenn n = 2 ist, eine Gruppe -E-B-E- ist, worin B gegebenenfalls durch $-N(R_{21})$- unterbrochenes $C_2$-$C_6$-Alkylen bedeutet, $R_{21}$ $C_1$-$C_{12}$-Alkyl, Cyclohexyl, Benzyl oder $C_1$-$C_4$-Hydroxyalkyl oder eine Gruppe der Formel

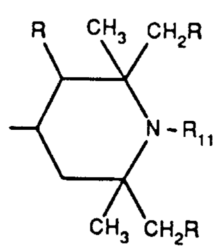

ist, $R_{22}$ $C_1$-$C_{12}$-Alkyl, Cyclohexyl, Benzyl, $C_1$-$C_4$-Hydroxyalkyl und $R_{23}$ Wasserstoff, $C_1$-$C_{12}$-Alkyl oder Phenyl bedeuten oder $R_{21}$ und $R_{22}$ zusammen $C_4$-$C_5$-Alkylen oder -Oxaalkylen, beispielsweise

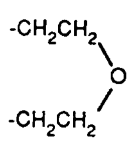

oder eine Gruppe der Formel

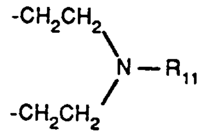

sind oder auch $R_{21}$ und $R_{22}$ jeweils eine Gruppe der Formel

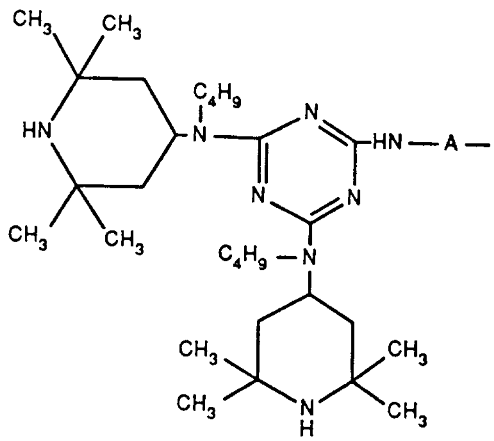

bedeuten.

Bedeuten etwaige Substituenten $C_1$-$C_{12}$-Alkyl, so stellen sie beispielsweise Methyl, Ethyl, n-Propyl, n-Butyl, sek.-Butyl, tert.-Butyl, n-Hexyl, n-Octyl, 2-Ethylhexyl, n-Nonyl, n-Decyl, n-Undecyl oder n-Dodecyl dar.

Bedeuten etwaige Substituenten $C_1$-$C_4$-Hydroxyalkyl, so stellen sie z.B. 2-Hydroxyethyl, 2-Hydroxypropyl, 3-Hydroxypropyl, 2-Hydroxybutyl oder 4-Hydroxybutyl dar.

Bedeutet A $C_2$-$C_6$-Alkylen, so stellt es beispielsweise Ethylen, Propylen, 2,2-Dimethylpropylen, Tetramethylen oder Hexamethylen dar.

Stellen $R_{21}$ und $R_{22}$ zusammen $C_4$-$C_5$-Alkylen oder Oxaalkylen dar, so bedeutet dies z.B. Tetramethylen, Pentamethylen oder 3-Oxapentamethylen.

Beispiele für Polyalkylpiperidin-Verbindungen dieser Klasse sind die Verbindungen der folgenden Formeln:

64)

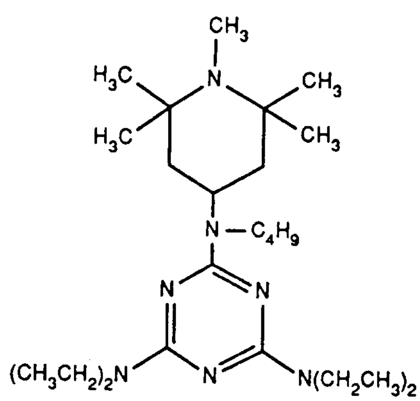

65)

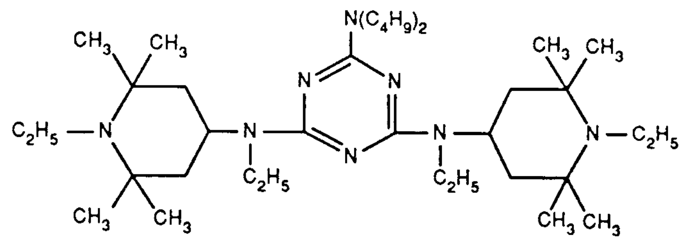

66)

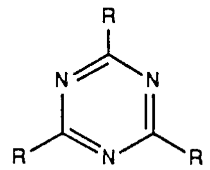

mit R =

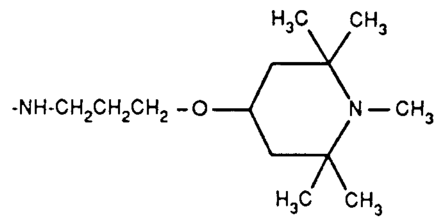

67)

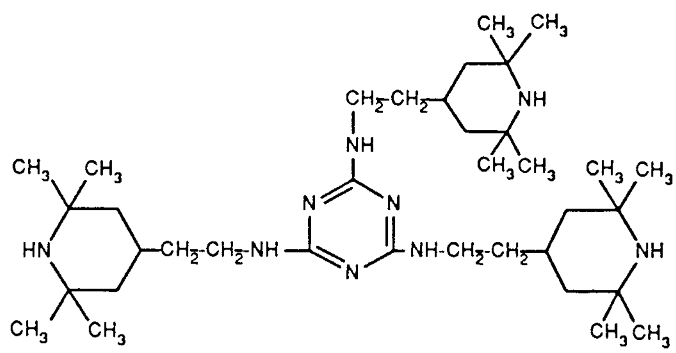

68)

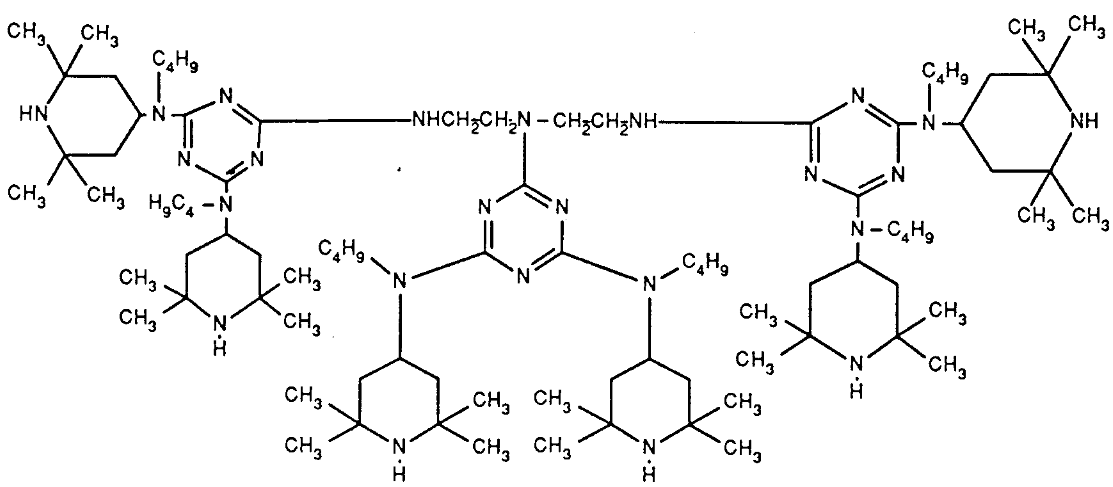

69)

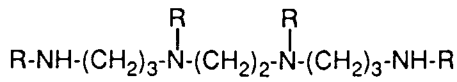

mit R = 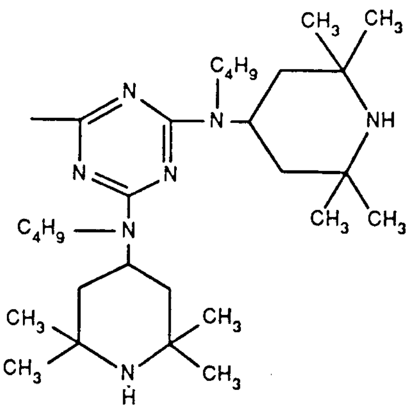

70)

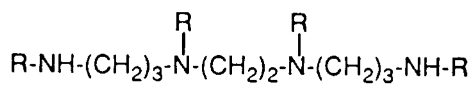

mit R = 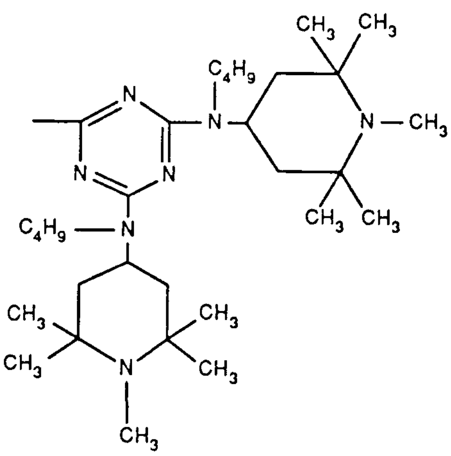

71)

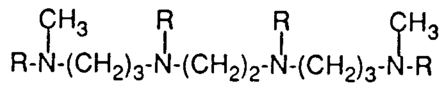

mit R =

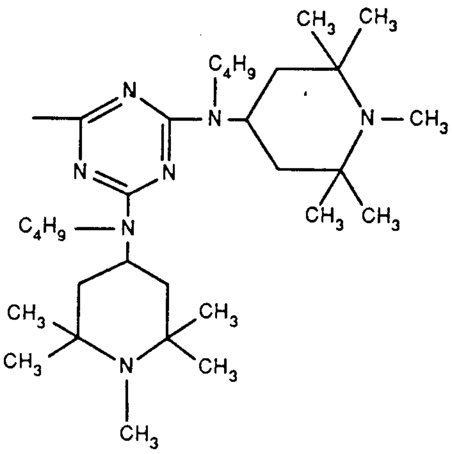

72)

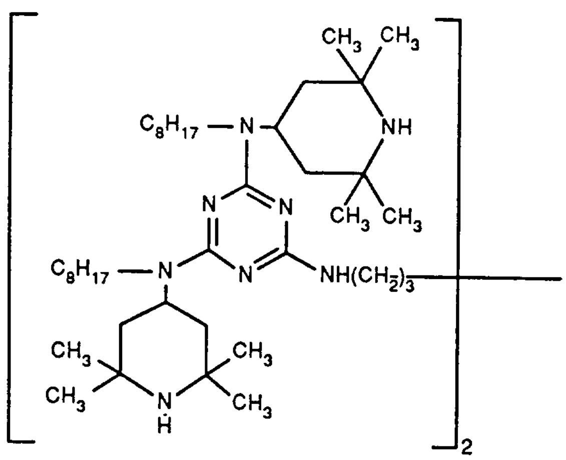

73)

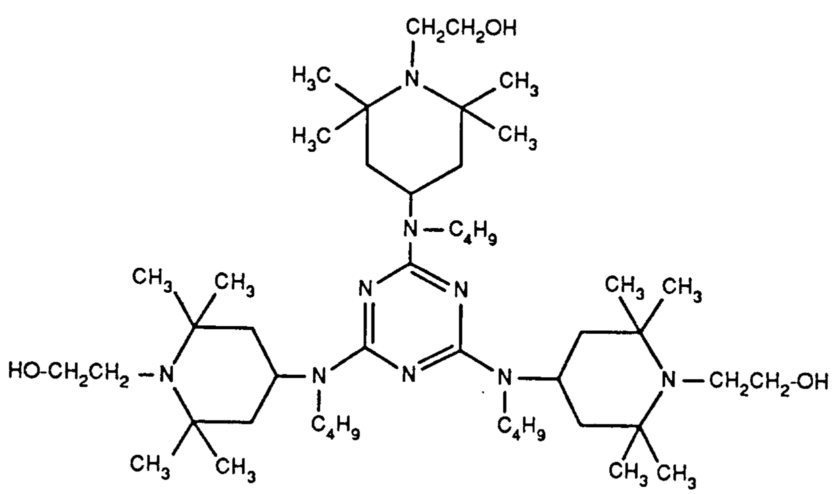

f) Oligomere oder polymere Verbindungen, deren wiederkehrende Struktureinheit einen 2,2,6,6-Tetraalkylpiperidinrest der Formel III enthält, insbesondere Polyester, Polyäther, Polyamide, Polyamine, Polyurethane, Polyharnstoffe, Polyaminotriazine, Poly(meth)acrylate, Poly(meth)acrylamide und deren Copolymere, die solche Reste enthalten.

Beispiele für 2,2,6,6-Polyalkylpiperidin-Lichtschutzmittel dieser Klasse sind die Verbindungen der folgenden Formeln, wobei m eine Zahl von 2 bis etwa 200 bedeutet.

75)

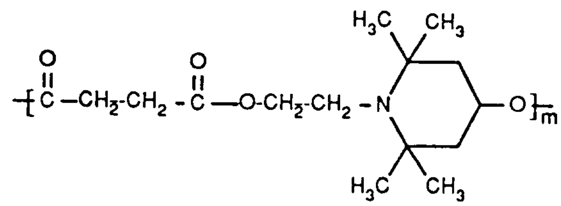

76)

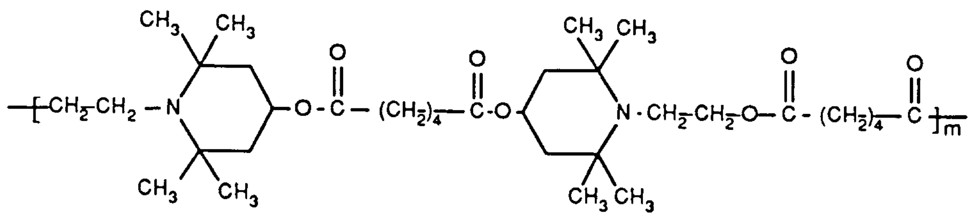

77)

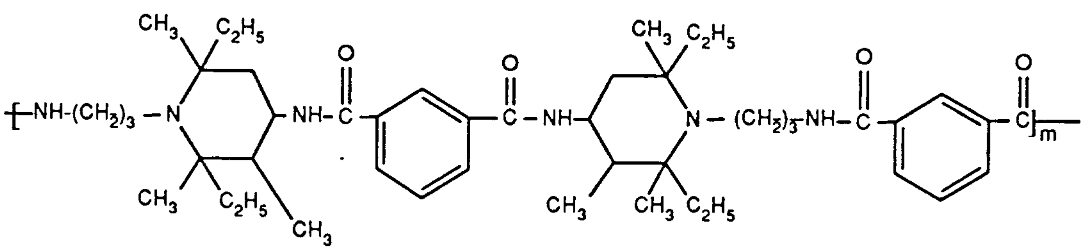

78)

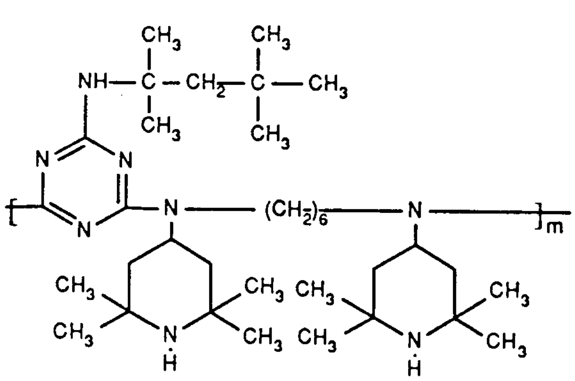

79)

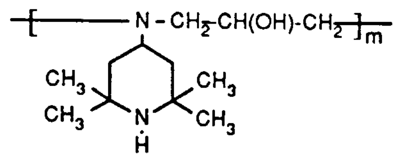

80)

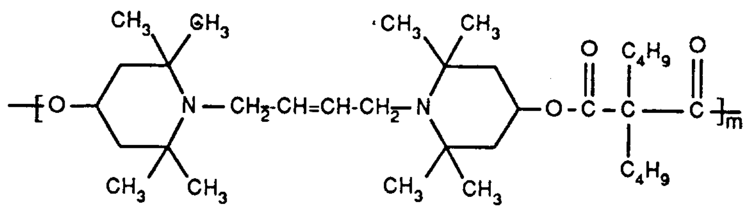

81)

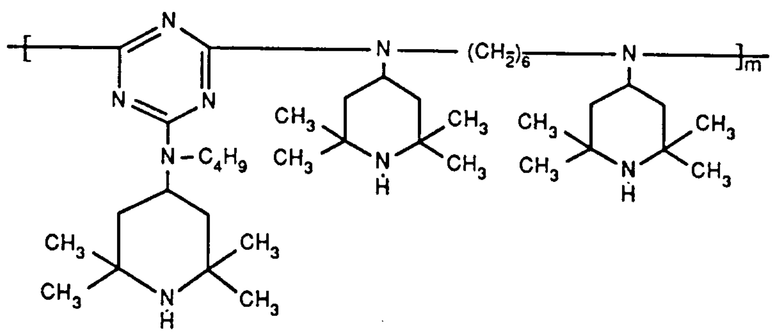

82)

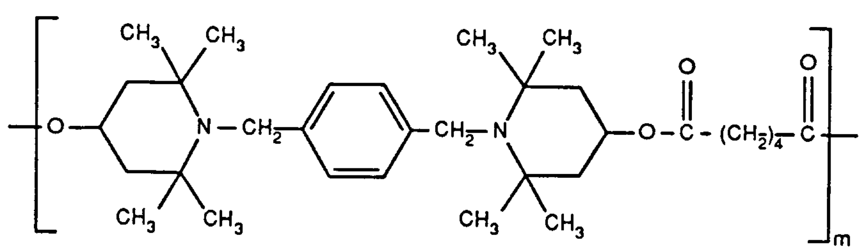

83)

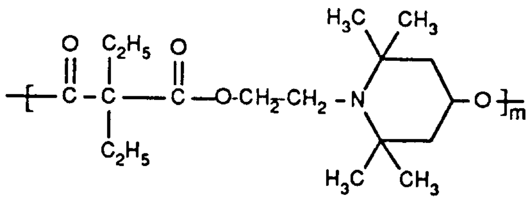

84)

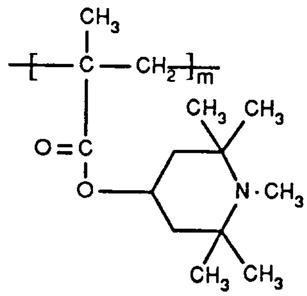

85)

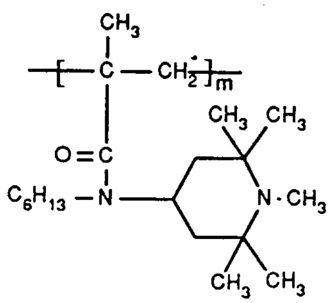

86)

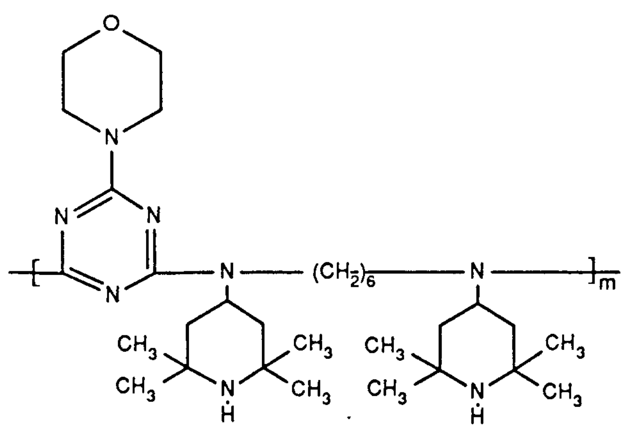

87)

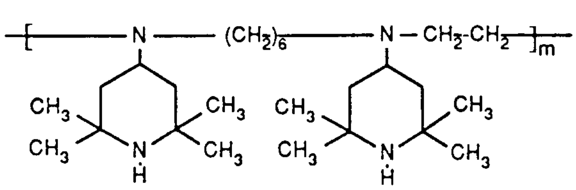

88)

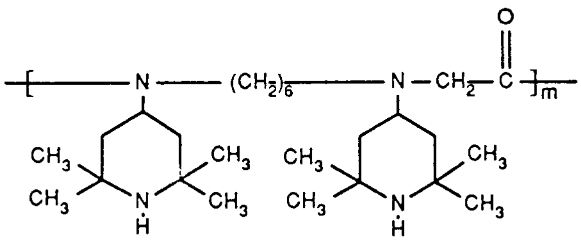

Von diesen Verbindungsklassen sind die Klassen a), e) und f) besonders geeignet, insbesondere die Verbindungen Nr. 8, 11, 12, 15, 19, 20, 69, 71, 75, 78, 86 und 87.

Den so stabilisierten Copolymeren können noch andere, bekannte Stabilisatoren zugesetzt werden. Beispiele hierfür sind die folgenden Klassen von Stabilisatoren:

1. Antioxidantien

1.1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol,2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.

1.2. Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Di-phenyl-4-octadecyloxyphenol.

1.3. Hydroxylierte Thiodiphenylether, z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).

1.4. Alkyliden-Bisphenole, z.B. 2,2'-Methylen-bis-(6-tert.butyl-4-methylphenol), 2,2'-Methylen-bis-(6-tert.butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.butylphenol), 4,4'-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3'-tert.butyl-4'-hydroxyphenyl)-butyrat], Bis-(3-tert.butyl-4-hydroxy-5-methylphenyl)-dicyclopentadien, Bis-[2-(3'-tert.butyl-2'-hydroxy-5'-methyl-benzyl)-6-tert.butyl-4-methyl-phenyl]-terephthalat.

1.5 Benzylverbindungen, z.B. 1,3,5-Tris-(3,5-di-tert.butyl-4-hydroxybenzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiolterephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocya nurat, 3,5-Di-tert.butyl-4-hydroxybenzyl-phosphonsäure-dioctadecyles ter, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.

1.6. Acylaminophenole, z.B. 4-Hydroxy-laurinsäureanilid, 4-Hydroxystearinsäureanilid, 2,4-Bis-(octylmercapto)-6-(3,5-di-tert.butyl-4-hydroxyanilino)-s-triazin, N-(3,5-di-tert.butyl-4-hydroxyphenyl)-carbaminsäureoctylester.

1.7. Ester der β-(3,5-Di-tert.butyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid.

1.8. Ester der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-iso-cyanurat, N,N'-Bis-(hydroxyethyl)-oxalsäurediamid.

1.9. Ester der β-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.

1.10. Amide der β-(3,5-Di-tert.butyl-4-hydroxyphenyl)-propionsäure, wie z.B. N,N'-Bis-(3,5-di-tert.butyl-4-hydroxyphenylpropionyl)-hexamethylendiamin, N,N'-Bis-(3,5-di-tert.butyl-4-hydroxyphenylpropionyl)-trimethylendiamin, N,N'-Bis-(3,5-di-tert.butyl-4-hydroxyphenylpropionyl)-hydrazin.

2. UV-Absorber und Lichtschutzmittel

2.1. 2-(2'-Hydroxyphenyl)-benztriazole, wie z.B. das 5'-Methyl-, 3',5'-Di-tert.butyl-, 5'-tert.Butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.

2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäure-methylester bzw. -butylester, α-Carbomethoxy-p-methoxyzimtsäure-methylester,N-(β-Carbomethoxy-β-cyanovinyl)-2-methyl-indolin.

2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzyl-phosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.

2.6. Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'di-tert.butyloxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von o-und p-Methoxy- sowie von o- und p-Ethoxy-di-substituierten Oxaniliden.

2.7. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1 ,3,5-triazin, 2-(2,4-Dihydroxyphenyl)-4,6-bis-(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin.

3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert.butyl-4-hydroxyphenylpropionyl)-hydrazin, 3-Salicyloylamino-1,2,4-triazol, Bis-(benzyliden)-oxalsäuredihydrazid.

4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butylphenoxy)-2,4,8,10-tetraoxa-3,9-diphosphaspiro[5.5]undecan.

Von besonderer Bedeutung ist die Mitverwendung von phenolischen Antioxidantien UV-Absorbern und von Phosphiten bzw. Phosphoniten. Diese Zusätze werden vorzugsweise in einer Menge von je 0,05 bis 5 Gew.-%, bezogen auf das Copolymere, zugesetzt.

Weiterhin können sonstige in der Kunststoff-Technologie übliche Hilfsmittel zugesetzt werden, wie z.B. Pigmente, Füllstoffe, Verstärkungsmittel, Gleitmittel, Flammschutzmittel, Antistatica oder Treibmittel.

Die folgenden Beispiele beschreiben die Erfindung näher ohne sie auf die Beispiele beschränken zu wollen. Darin bedeuten Teile Gewichtsteile und % Gewichts-%, soweit nicht anders vermerkt.

Beispiel 1: In einem 3 l-Reaktionsgefäss werden 1150 g eines Polybutadienlatex mit 59 % Feststoffgehalt (Baygal® 2004 K, Bayer AG) und 1220 g deionisiertem Wasser vorgelegt, viermal entgast, unter Argon bei 100 Umdrehungen/Minute gerührt und innerhalb 30 Minuten auf 60 °C erwärmt. Man gibt dann 0,1 g tert-Dodecylmercaptan und 54 g 4-Acryloyloxy-1,2,2,6,6-pentamethylpiperidin (APP) dazu. Für 2 Minuten wird der Rührer auf ca. 250 Umdrehungen/Minute gestellt. Danach geht man wieder herunter auf 100 Umdrehungen/Minute und gibt unmittelbar 2 g Kaliumpersulfat dazu. Nach 7-stündiger Polymerisation wird der Latex auf Raumtemperatur abgekühlt.

In einem 3 l Rührgefäss werden 680 g von diesem Latex mit 600 g Wasser verdünnt, viermal entgast und unter Argon in einer halben Stunde auf 60 °C gebracht. Eine wässrige Emulgatorlösung wird dazugegeben; sie besteht aus 31 mi einer 10 %igen Lösung von Kaliumrosinat (Dresinate® 731, Hercules Inc.), 2,7 ml einer 10 %igen NaOH-Lösung, 6,7 mi einer 10 %igen Glucose-Lösung und 1,6 ml einer 10 %igen

Lösung von Natriumalkylnaphthalin-sulfonat (Tamol® NN, BASF AG). Die Initiator-Lösung wird zubereitet, indem man 500 mg $FeSO_4.7H_2O$ in 50 ml Wasser löst, 16 ml dieser Lösung zu 36 ml Wasser und zu 4,8 g $Na_4P_2O_7$ in 48 ml Wasser gibt. Nach 15 Minuten Rühren wird diese 100 ml erhaltende entgaste Lösung zum Latex gegeben. Anschliessend werden 400 g Styrol, 200 g Acrylnitril, 4,0 g tert-Dodecylmercaptan und 4,0 g Cumolhydroperoxid zugegeben und 7 Stunden bei 60 °C mit einer Rührgeschwindigkeit von 100 Umdrehungen/Minute gerührt. Alle diese Operationen werden unter Ausschluss von Sauerstoff ausgeführt.

Dem Latex werden 10 ml einer 20 %igen wässrigen Emulsion eines phenolischen Antioxidans (Irganox® 1076, Ciba-Geigy AG) sowie 100 ml einer 10 %igen Lösung des Natriumsalzes von Ethylendiamintetraessigsäure zugesetzt und der Latex wird über Glaswolle filtriert.

Die Emulsion wird in 4 l Wasser von 90 °C und 70 ml einer wässrigen Lösung von 10 % $MgSO_4.7H_2O$ und 5 % Essigsäure unter Rühren (300 U/min) zügig zugegeben und gefällt. Die flüssige Phase über dem ausgefällten Copolymer hat einen pH-Wert von 5,3, der durch Zusatz von Sodalösung auf 8 gebracht wird. Zur Vervollständigung der Koagulation wird noch 30 Minuten bei 90 °C gerührt. Das in Pulverform ausgefallene Copolymer wird heiss abfiltriert. Man erhält 740 g Copolymer als farbloses Pulver, das 2 % eingebautes APP enthält.

In analoger Weise werden Polymere mit verschiedenem Gehalt an eingebautem APP hergestellt, entsprechend den Angaben der Tabelle 1. Die erhaltenen Polymeren werden auf einem Zweiwalzen-Mischwerk 4 Minuten bei 170 °C mit 1 % eines Gleitmittels (Irgawax® 280, Ciba-Geigy AG), 0,5 % eines UV-Absorbers (Tinuvin® P, Ciba-Geigy AG) und 1 % eines nicht-ungesättigten gehinderten Amines.

Als solche werden verwendet:

HA-1 = Bis(1,2,2,6,6-pentamethyl-4-piperidyl)sebacat

HA-2 = Bis(2,2,6,6-tetramethyl-4-piperidyl)sebacat

Die erhaltenen Mischungen werden in einer Heizpresse bei 180 °C zu 2 mm starken Platten verpresst. Aus den Platten werden Prüfkörper von 10 x 60 x 2 mm ausgeschnitten. Diese Plättchen werden in einem Xenotest 450 mit UV-Licht belichtet. In regelmässigen Abständen werden Proben entnommen und deren Schlagbiegefestigkeit gemäss Methode ASTM D 4508-85 gemessen. Dabei erfolgt der Pendelschlag auf die belichtete Seite der Probe. In Tabelle 1 ist die für den Bruch der Probe erforderliche Energie angegeben. Je höher dieser Wert ist, desto höher ist die Schlagbiegefestigkeit der Probe. Bei ungeschädigten Proben erfolgt kein Bruch (KB).

**Tabelle 1**

| Gehalt an gepfropftem APP*) | Gehalt an zugesetztem Amin-Lichtschutzmittel | Schlagbiegefestigkeit in kJ/m² nach | | | |
|---|---|---|---|---|---|
| | | 240 | 320 | 450 | Stunden im Xenotest 450 |
| 1,5 % | 0 % HA-1 | 43 | 35 | 33 | |
| 1,5 % | 1 % HA-1 | KB | 61 | 58 | |
| 0,8 % | 0 % HA-1 | 47 | 45 | 31 | |
| 0,8 % | 1 % HA-1 | 49 | 46 | 34 | |
| 0 % | 0 % HA-1 | 29 | 19 | 18 | |
| 0 % | 1 % HA-1 | 43 | 32 | 29 | |
| 1,5 % | 1 % HA-2 | KB | KB | 51 | |

*) Berechnet aus dem N-Gehalt.

Beispiel 2: Das Copolymere (ABS-Polymer) wird wie in Beispiel 1 hergestellt und wie dort beschrieben auf dem 2-Walzen-Mischwerk mit Gleitmittel, UV-Absorber und gehindertem Amin vermischt. Zusätzlichwerden jedoch noch 0,5 % Tris(nonylphenyl)phosphit (TNPP) als Verarbeitungsstabilisator zugegeben.

Die Wirkung der Zusätze wird wie in Beispiel 1 durch Messung der Schlagbiegefestigkeit nach UV-Bestrahlung getestet. Die Ergebnisse sind in Tabelle 2 aufgeführt.

**Tabelle 2**

| Gehalt an gepfropftem APP | Gehalt an TNPP | Zugesetztes Lichtschutzmittel | Schlagbiegefestigkeit in $kJ/m^2$ nach | | | |
|---|---|---|---|---|---|---|
| | | | 240 | 450 | 950 | Stunden im Xenotest 450 |
| 1,5 % | 0 % | 1 % HA-2 | KB | 51 | 26 | |
| 1,5 % | 0,5 % | 1 % HA-2 | KB | KB | 33 | |

Beispiel 3: Man wiederholt Beispiel 1 mit Polymeren mit verschiedenem Gehalt an gepfropftem APP sowie an zugesetzten Lichtschutzmitteln, entsprechend den Angaben in Tabelle 3.

**Tabelle 3**

| Gehalt an gepfropftem APP | Gehalt an zugesetztem Lichtschutzmittel | Schlagbiegefestigkeit in $kJ/m^2$ nach | | |
|---|---|---|---|---|
| | | 500 | 1550 | Stunden im Xenotest 450 |
| 2,0 % | 1 % HA-1 | KB | 31 | |
| 0 % | 2 % APP<br>1 % HA-1 | KB | 19 | |
| 0 % | 3 % HA-1 | KB | 25 | |

(Antioxidans: 0,2 % Irganox® 1076; Verarbeitungsstabilisator: 0,5 % TNPP)

Beispiel 4: Man wiederholt Beispiel 1 mit Polymeren mit verschiedenem Gehalt an gepfropftem APP sowie an zugesetztemLichtschutzmittel, entsprechend den Angaben in Tabelle 4.

**Tabelle 4**

| Gehalt an gepfropftem APP | Gehalt an zugesetztem Lichtschutz-mittel | Schlagbiegefestigkeit in $kJ/m^2$ nach | | | |
|---|---|---|---|---|---|
| | | 250 | 500 | 1080 | Stunden im Xenotest 450 |
| 2,0 % | 0 % | KB | KB | 23 | |
| 2,0 % | 1 % HA-1 | KB | KB | 33 | |
| 0 % | 0 % | KB | 24 | 20 | |
| 0 % | 1 % HA-1 | KB | KB | 13 | |
| 0 % | 2 % APP<br>1 % HA-1 | KB | KB | 14 | |

(Antioxidans: 0,2 % Irganox® 1076; Verarbeitungsstabilisator: 0,5 % Irgafos® 168)

Beispiel 5: Das Copolymere wird wie in Beispiel 1 hergestellt, jedoch wird zusammen mit dem APP jeweils 2 % Butylacrylat copolymerisiert. Die Compoundierung geschieht wie in Beispiel 1 angegeben durch Zusatz folgender Additive:

| | |
|---|---|
| Gleitmittel | 1 % Irgawax® 280 |
| UV-Absorber | 0,5 % Tinuvin® P |
| Verarbeitungsstabilisator | 0,5 % TNPP |
| Amin-Lichtschutzmittel | 0,5 % oder 1 % HA-1 oder HA-2 |

Die Wirksamkeit der Additive wird wie in Beispiel 1 getestet.
Die Resultate sind in Tabelle 5 aufgeführt.

**Tabelle 5**

| Gehalt an gepfropftem APP | Zugesetztes Amin-Lichtschutzmittel | Schlagbiegefestigkeit in $kJ/m^2$ nach | | | |
|---|---|---|---|---|---|
| | | 150 | 200 | 380 | Stunden im Xenotest 450 |
| 1,5 % | 0 % | 48 | 30 | 22 | |
| 1,5 % | 0,5 % HA-1 | KB | 48 | 29 | |
| 1,5 % | 1 % HA-1 | KB | 55 | 46 | |
| 1,5 % | 1 % HA-2 | KB | KB | KB | |

Beispiel 6: Das Copolymer wird wie in Beispiel 1 hergestellt, jedoch wird als pfropfbares HALS 4-Methacryloyloxy-1,2,2,6,6-pentamethylpiperidin (MAPP) verwendet. Die Compoundierung geschieht wie in Beispiel 1 angegeben unter Zusatz folgender Additive:

| | |
|---|---|
| Gleitmittel | 1 % Irganox® 280 |
| UV-Absorber | 0,5 % Tinuvin® P |
| Verarbeitungsstabilisator: | 0,5 % TNPP |
| Amin-Lichtschutzmittel: | 1 % HA-1 oder HA-2. |

Die Wirksamkeit der Additive wird wie in Beispiel 1 getestet.
Die Resultate sind in Tabelle 6 aufgeführt.

**Tabelle 6**

| Gehalt an gepfropftem MAPP | Gehalt an zugesetztem Lichtschutz-mittel | Schlagbiegefestigkeit in $kJ/m^2$ nach | | | |
|---|---|---|---|---|---|
| | | 250 | 500 | 770 | Stunden im Xenotest 450 |
| 2,0 % | 0 % | KB | 26 | 22 | |
| 2,0 % | 1 % HA-1 | KB | KB | 28 | |
| 2,0 % | 1 % HA-2 | KB | KB | 27 | |

## Patentansprüche

1. Gegen Lichtschädigung stabilisiertes Copolymer aus Styrol oder α-Methylstyrol und mindestens einem Comonomer, wobei das Copolymer vernetzte Elastomerteilchen enthält, welche durch Copolymerisation mit einem ungesättigten Derivat eines sterisch gehinderten Amins modifiziert sind, dadurch gekennzeichnet, dass das Copolymer ausserdem ein nicht-ungesättigtes sterisch gehindertes Amin enthält.

2. Stabilisiertes Copolymer gemäss Anspruch 1, dadurch gekennzeichnet, dass es sich um ein Pfropfcopolymer von Styrol und mindestens einem Comonomer auf dem modifizierten Elastomer handelt.

3. Stabilisiertes Copolymer gemäss Anspruch 1, dadurch gekennzeichnet, dass das Comonomer Acrylnitril ist.

4. Stabilisiertes Copolymer gemäss Anspruch 1, dadurch gekennzeichnet, dass das Comonomer Methylmethacrylat ist.

5. Stabilisiertes Copolymer gemäss Anspruch 1, dadurch gekennzeichnet, dass die Elastomerteilchen aus Polybutadien bestehen, auf das ein ungesättigtes gehindertes Amin aufgepfropft ist.

6. Stabilisiertes Copolymer gemäss Anspruch 5, dadurch gekennzeichnet, dass das aufgepfropfte gehinderte Amin ein copolymerisierbares ungesättigtes Derivat des 2,2,6,6-Tetramethylpiperidins ist.

7. Stabilisiertes Copolymer gemäss Anspruch 6, dadurch gekennzeichnet, dass das aufgepfropfte gehinderte Amin 4-Acryloyloxy-1,2,2,6,6-pentamethylpiperidin ist.

8. Stabilisiertes Copolymer gemäss Anspruch 1, enthaltend als nicht-ungesättigtes sterisch gehindertes Amin ein Derivat des 2,2,6,6-Tetramethylpiperidins.

9. Stabilisiertes Copolymer gemäss Anspruch 8, enthaltend als nicht-ungesättigtes Tetramethylpiperidinderivat eine Verbindungen der Formel IV,

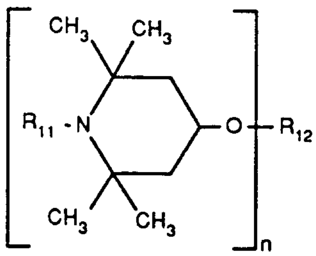

(IV),

worin n eine Zahl von 1 bis 4 ist, $R_{11}$ Wasserstoff, $C_1$-$C_4$-Alkyl, Benzyl, Acetyl, $C_1$-$C_{12}$-Alkoxy, $C_7$-$C_9$-Phenylalkoxy oder Cyclohexyloxy bedeutet,
und wenn n 1 ist, $R_{12}$ den Rest einer gesättigten aliphatischen, Carbonsäure mit 2-18 C-Atomen, einer gesättigten cycloaliphatischen Carbonsäure mit 7-15 C-Atomen oder einer aromatischen Carbonsäure mit 7-15 C-Atomen bedeutet,
wenn n 2 ist, $R_{12}$ den zweiwertigen Rest einer gesättigten aliphatischen Dicarbonsäure mit 2-12 C-Atomen oder einer gesättigten cycloaliphatischen oder aromatischen Dicarbonsäure mit 8-14 C-Atomen oder einer gesättigten aliphatischen, cycloaliphatischen oder aromatischen Dicarbaminsäure mit 8-14 C-Atomen bedeutet,
wenn n 3 ist, $R_{12}$ den dreiwertigen Rest einer gesättigten aliphatischen Tricarbonsäure mit 6-12 C-Atomen oder einer aromatischen Tricarbonsäure mit 9-15 C-Atomen bedeutet, und wenn n 4 ist, $R_{12}$ den vierwertigen Rest einer gesättigten aliphatischen Tetracarbonsäure mit 8-12 C-Atomen oder einer aromatischen Tetracarbonsäure mit 10-16 C-Atomen bedeutet.

**10.** Stabilisiertes Copolymer gemäss Anspruch 1, enthaltend 0,1 bis 10 Gew.-% des copolymerisierten sterisch gehinderten Amins und 0,05 bis 5 Gew.-% des nicht-ungesättigten sterisch gehinderten Amins.

**11.** Stabilisiertes Copolymer gemäss Anspruch 1, enthaltend ein phenolisches Antioxidans.

**12.** Stabilisiertes Copolymer gemäss Anspruch 1, enthaltend einen UV-Absorber.

**13.** Stabilisiertes Copolymer gemäss Anspruch 12, enthaltend als UV-Absorber ein Derivat des 2-(2-Hydroxyphenyl)-benztriazols.

**14.** Stabilisiertes Copolymer gemäss Anspruch 1, enthaltend einen Verarbeitungsstabilisator aus der Klasse der Phosphite oder Phosphonite.

**15.** Verfahren zur Herstellung eines stabilisierten Copolymers aus Styrol oder α-Methylstyrol und mindestens einem Comonomer, wobei das Copolymer vernetzte Elastomerteilchen enthält, dadurch gekennzeichnet, dass zuerst auf die Elastomerteilchen ein ungesättigtes sterisch gehindertes Amins aufgepfropft wird, dann auf die so modifizierten Elastomerteilchen ein Gemisch von Styrol oder α-Methylstyrol und mindestens einem Comonomer aufgepfropft wird, und schliesslich dem so erhaltenen Copolymeren ein nicht-ungesättigtes sterisch gehindertes Amin zugesetzt wird.

**16.** Verfahren gemäss Anspruch 15, dadurch gekennzeichnet, dass das Aufpfropfen des sterisch gehinderten Amins und des Gemisches von Styrol oder α-Methylstyrol und mindestens einem Comonomeren in wässriger Emulsion geschieht, das so erhaltene Copolymere durch Koagulation ausgefällt wird und dem koagulierten Copolymer das nicht-ungesättigte sterisch gehinderte Amin zugesetzt wird.

**17.** Verfahren gemäss Anspruch 15, dadurch gekennzeichnet, dass zusammen mit dem ungesättigten gehinderten Amin ein Comonomer aus der Klasse der Alkylacrylate oder Alkylmethacrylate auf das Elastomer aufgepfropft wird.

## Claims

**1.** A light-stabilised copolymer of styrene or α-methylstyrene and at least one comonomer, which copolymer contains crosslinked elastomer particles which are modified by copolymerisation with an unsaturated derivative of a sterically hindered amine, wherein the copolymer additionally contains a

sterically hindered amine which is not unsaturated.

2. A stabilised copolymer according to claim 1, which is a graft copolymer of styrene and at least one comonomer on the modified elastomer.

3. A stabilized copolymer according to claim 1, wherein the comonomer is acrylonitrile.

4. A stabilized copolymer according to claim 1, wherein the comonomer is methyl methacrylate.

5. A stabilised copolymer according to claim 1, wherein the elastomer particles consist of polybutadiene onto which an unsaturated hindered amine is grafted.

6. A stabilized copolymer according to claim 5, wherein the grafted hindered amine is a copolymerisable unsaturated derivative of 2,2,6,6-tetramethylpiperidine

7. A stabilised copolymer according to claim 6, wherein the grafted hindered amine is 4-acryloyloxy-1,2,2,6,6-pentamethylpiperidine.

8. A stabilized copolymer according to claim 1, which contains a derivative of 2,2,6,6-tetramethylpiperidine as sterically hindered amine which is not unsaturated.

9. A stabilized copolymer according to claim 8, which contains as tetramethylpiperidine derivative which is not unsaturated a compound of formula IV

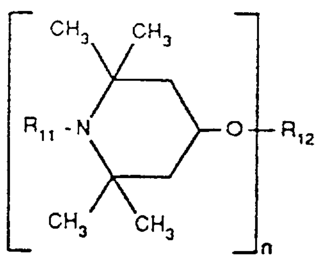

(IV),

wherein n is an integer from 1 to 4, $R_{11}$ is hydrogen, $C_1$-$C_4$alkyl, benzyl, acetyl, $C_1$-$C_{12}$alkoxy, $C_7$-$C_9$phenylalkoxy or cyclohexyloxy and, if n is 1, $R_{12}$ is the radical of a saturated aliphatic carboxylic acid of 2 to 18 carbon atoms, of a saturated cycloaliphatic carboxylic acid of 7 to 15 carbon atoms, or of an aromatic carboxylic acid of 7 to 15 carbon atoms, and, if n is 2, $R_{12}$ is the divalent radical of a saturated aliphatic dicarboxylic acid of 2 to 12 carbon atoms, or of a saturated cycloaliphatic or aromatic dicarboxylic acid of 8 to 14 carbon atoms, or of a saturated aliphatic, cycloaliphatic or aromatic dicarbamic acid of 8 to 14 carbon atoms, and, if n is 3, $R_{12}$ is the trivalent radical of a saturated aliphatic tricarboxylic acid of 6 to 12 carbon atoms or of an aromatic tricarboxylic acid of 9 to 15 carbon atoms, and, if n is 4, $R_{12}$ is the tetravalent radical of a saturated aliphatic tetracarboxylic acid of 8 to 12 carbon atoms or of an aromatic tetracarboxylic acid of 10 to 16 carbon atoms.

10. A stabilised copolymer according to claim 1, which contains 0.1 to 10% by weight of the copolymerised sterically hindered amine and 0.05 to 5% by weight of the sterically hindered amine which is not unsaturated.

11. A stabilized copolymer according to claim 1, which contains a phenolic antioxidant.

12. A stabilized copolymer according to claim 1, which contains a UV absorber.

13. A stabilized copolymer according to claim 12, which contains a derivative of 2-(2-hydroxyphenyl)-benzotriazole as UV absorber.

**14.** A stabilised copolymer according to claim 1, which contains a processing stabilizer of the class of the phosphites or phosphonites.

**15.** A process for the preparation of a stabilised copolymer of styrene or α-methylstyrene and at least one comonomer, which copolymer contains crosslinked elastomer particles, which process comprises first grafting an unsaturated sterically hindered amine onto the elastomer particles, then grafting a mixture of styrene or α-methylstyrene and at least one comonomer onto the thus modified elastomer particles and, finally, adding a sterically hindered amine which is not unsaturated to the resultant copolymer.

**16.** A process according to claim 15, which comprises carrying out the grafting of the sterically hindered amine and the mixture of styrene or α-methylstyrene and at least one comonomer in aqueous emulsion, precipitating the copolymer thus obtained by coagulation, and adding the sterically hindered amine which is not unsaturated to the coagulated copolymer.

**17.** A process according to claim 15, which comprises grafting a comonomer of the class of the alkyl acrylates or alkyl methacrylates, together with the unsaturated hindered amine, onto the elastomer.

**Revendications**

**1.** Copolymères, stabilisé à l'égard des dégradations provoquées par l'action de la lumière, de styrène ou d'α-méthylstyrène et d'au moins un comonomère, contenant des particules d'élastomères réticulés qui sont modifiées par une copolymérisation avec un dérivé insaturé d'une amine à empêchement stérique, copolymère caractérisé en ce qu'il contient en outre une amine à empêchement stérique sans insaturation.

**2.** Copolymère stabilisé selon la revendication 1, caractérisé en ce qu'il s'agit d'un copolymère de greffage du styrène et d'au moins un comonomère sur l'élastomère modifié.

**3.** Copolymère stabilisé selon la revendication 1, caractérisé en ce que le comonomère est l'acrylonitrile.

**4.** Copolymère stabilisé selon la revendication 1, caractérisé en ce que le comonomère est le méthacrylate de méthyle.

**5.** Copolymère stabilisé selon la revendication 1, caractérisé en ce que les particules de l'élastomère sont formées de polybutadiène sur lequel est greffée une amine à empêchement stérique insaturée.

**6.** Copolymère stabilisé selon la revendication 5, caractérisé en ce que l'amine à empêchement stérique greffée est un dérivé insaturé copolymérisable de la 2,2,6,6-tétraméthylpipéridine.

**7.** Copolymère stabilisé selon la revendication 6, caractérisé en ce que l'amine à empêchement stérique greffée est la 4-acryloyloxy-1,2,2,6,6-pentaméthyl-pipérine.

**8.** Copolymère stabilisé selon la revendication 1, comprenant comme amine à empêchement stérique sans insaturation un dérivé de la 2,2,6,6-tétraméthylpipéridine.

**9.** Copolymère stabilisé selon la revendication 8, comprenant comme dérivé de tétraméthylpipéridine sans insaturation un composé de formule IV

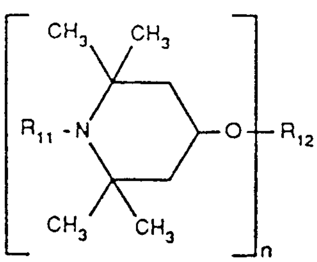

(IV),

dans laquelle n est un nombre de 1 à 4, $R_{11}$ signifie un hydrogène un alkyle en $C_1$-$C_4$, un benzyle, un acétyle, un alcoxy en $C_1$-$C_{12}$, un phénylalcoxy en $C_7$-$C_9$ ou un cyclohexyloxy, et si n vaut 1, $R_{12}$ signifie le radical d'un acide carboxylique aliphatique saturé, ayant de 2 à 18 atomes de carbone, d'un acide carboxylique cycloaliphatique saturé ayant de 7 à 15 atomes de carbone ou d'un acide carboxylique aromatique ayant de 7 à 15 atomes de carbone, si n vaut 2, $R_{12}$ signifie le radical divalent d'un acide dicarboxylique aliphatique saturé ayant de 2 à 12 atomes de carbone ou d'un acide dicarboxylique cycloaliphatique saturé ou aromatique ayant de 8 à 14 atomes de carbone ou encore d'un acide dicarbamique aliphatique ou cyclo-aliphatique saturé ou aromatique ayant de 8 à 14 atomes de carbone, si n vaut 3, $R_{12}$ est le radical trivalent d'un acide tricarboxylique aliphatique saturé ayant de 6 à 12 atomes de carbone ou d'un acide tricarboxylique aromatique ayant de 9 à 15 atomes de carbone, et si n vaut 4, $R_{12}$ signiffie le radical tétravalent d'un acide tétracarboxylique aliphatique saturé ayant de 8 à 12 atomes de carbone ou d'un acide tétracarboxylique aromatique ayant de 10 à 16 atomes de carbone.

**10.** Copolymère stabilisé selon la revendication 1, comprenant de 0,1 à 10% en poids de l'amine à empêchement stérique copolymérisée et de 0,05 à 5% en poids de l'amine à empêchement stérique qui n'est pas insaturée.

**11.** Copolymère stabilisé selon la revendication 1, contenant un anti-oxydant phénolique.

**12.** Copolymère stabilisé selon la revendication 1, contenant un absorbeur d'ultraviolet.

**13.** Copolymère stabilisé selon la revendication 12, comprenant comme absorbeur d'UV un dérivé du 2-(2-hydroxyphényl)-benzotriazole.

**14.** Copolymère stabilisé selon la revendication 1, comprenant un stabilisant de traitement de la catégorie des phosphites ou phosphonites.

**15.** Procédé de préparation d'un copolymère stabilisé de styrène ou d'α-méthylstyrène et d'au moins un comonomère, le copolymère comprennant des particules d'un élastomère réticulé, procédé caractérisé en ce que l'on greffe d'abord sur les particules de l'élastomère une amine à empêchement stérique insaturée, puis on greffe sur les particules ainsi modifiées un mélange de styrène ou d'α-méthylstyrène et d'au moins un comonomère, et on ajoute ensuite au copolymère ainsi formé une amine à empêchement stérique qui n'est pas insaturée.

**16.** Procédé selon la revendication 15, caractérisé en ce que l'on effectue en émulsion aqueuse la greffe de l'amine à empêchement stérique et un mélange de styrène ou d'α-méthylstyrène et d'au moins un comonomère, on fait précipiter par coagulation le copolymère ainsi formé et on ajoute au copolymère coagulé l'amine à empêchement stérique qui n'est pas insaturée.

**17.** Procédé selon la revendication 15, caractérisé en ce que l'on greffe sur l'élastomère, conjointement avec l'amine à empêchement stérique insaturée, un comonomère de la catégorie des acrylates et méthacrylates d'alkyles.